# EUROPEAN PATENT APPLICATION

(11) **EP 2 395 508 A1**
(43) Date of publication of application: **14.12.2011**
(21) Application number: 11168601.0
(22) Date of filing: 02.06.2011
(51) Int. Cl.: G11B 7/125, G11B 7/0045, G11B 7/006

(54) **Recording device, recording method, and program**

(30) Priority: 09.06.2010 JP 2010131618
(71) Applicant: Sony Corporation, Tokyo 108-0075 (JP)
(72) Inventor: Ikegaya, Naoaki, Shinagawa-ku, Tokyo (JP); Sasaki, Takashi, Shinagawa-ku, Tokyo (JP)
(74) Representative: Horner, David Richard

(57) **Abstract**

A recording device includes: a recording unit that records information in a recording layer of an optical recording medium through laser beam emission performed based on a laser driving pulse; and a control unit that reads out setting information of a recording laser power and a laser driving pulse of a past that are stored in correspondence with an optical recording medium set as a recording target from a setting information storing area, allows the recording unit to perform test writing for a test writing area of the recording layer of the optical recording medium using the read out setting information of the past and to reproduce a test writing portion, and performs a setting process in which recording laser power and a laser driving pulse are set based on a result of the test writing and the reproduction.

## Description

### BACKGROUND

The present disclosure relates to a recording device and a recording method for performing optical recording for a recording medium such as an optical disc and a program that implements the recording device and the recording method.

Various types of recordable optical recording media such as a write-once-type optical disc and a rewritable optical disc are known.

For example, there are a CD-R (Compact Disc - Recordable) , a CD-RW (Compact Disc - Rewritable), a DVD-R (Digital Versatile Disc - Recordable), a DVD-RW (Digital Versatile Disc - Rewritable), a DVD+R (Digital Versatile Disc+Recordable), a DVD+RW (Digital Versatile Disc +Rewritable), a DVD-RAM (Digital Versatile Disc -Random Access Memory), a BD-R(Blu-ray Disc- Recordable), a BD-RE(Blu-ray Disc- Rewritable), and the like.

In an optical recording and reproducing device that records data on such optical recording media, in order to record a data area in the state in which an excellent recording quality can be acquired, recording is performed with optimal recording power and an optimal recording pulse. Accordingly, in a test writing area (PCA: Power Calibration Area) that is arranged on the optical recording medium in advance, test writing (OPC: Optimum Power Calibration) is performed so as to acquire the optimal recording power and the optimal recording pulse, and then actual recording is performed, which is important for acquiring the recording compatibility.

However, while the area serving as the PCA for which the OPC is performed is arranged in a management area (for example, a read-in area, a read-out area, or the like) in advance, the recording area has limitations.

For example, when the adjustment or the like of the optimal recording power and the optimal recording pulse is repeatedly performed within the PCA due to a change in the temperature of the periphery of an area in which recording is performed or perturbation factors, the amount of consumption of the PCA increases. Thus, in a case where a plurality of additional recording operations are performed for a same recording medium, when the upper limit of the number of uses of the PCA area is reached due to insufficiency of the PCA area, there is a case where the optimal recording power or the optimal recording pulse is not acquired.

In addition, in a case where the adjustment of the optimal recording power and the optimal recording pulse is performed at the time of inserting an optical disc, a time is necessary for the start of the actual recording operation after the insertion of the optical disc. Accordingly, a time is necessary for the start of recording data into a data area at a time when a general user records a TV program or the like, which is inconvenient.

Meanwhile, there is a method as in JP-A-2006-164517 in which a stored result of test writing is read out during additional recording, and the optimal recording power is acquired by correcting the recording power based on a result of an RF signal or the like that is acquired by reproducing a portion recorded in advance.

However, according to this method, although the optimal recording power can be acquired, it is difficult to record data through correction of the recording pulse to an optimal recording.

In addition, according to the method, it is difficult to respond to a change in the optimal recording power according to a physical change in the optical recording medium such as a change in the temperature environment or radial tilt.

### SUMMARY OF THE INVENTION

Embodiments of the invention enable a reduction of the consumption of the OPC performing area such as a PCA and a shortening of a time until the start of actual data recording by efficiently performing the OPC in a speedy manner.

According to an embodiment of the present disclosure, there is provided a recording device including: a recording unit that records information in a recording layer of an optical recording medium through laser beam emission performed based on a laser driving pulse; and a control unit that reads out setting information of a recording laser power and a laser driving pulse of a past that are stored in correspondence with an optical recording medium set as a recording target from a setting information storing area, allows the recording unit to perform test writing for a test writing area of the recording layer of the optical recording medium using the read out setting information of the past and to reproduce a test writing portion, and performs a setting process in which recording laser power and a laser driving pulse are set based on a result of the test writing and the reproduction.

In addition, the above-described control unit may store setting information of the recording laser power and the laser driving pulse that is set by the setting process in the setting area storing area.

In addition, in a case where the setting information corresponding to the optical recording medium set as the recording target is determined not to be stored in the setting information storing area, the control unit may allow the recording unit to perform test writing not using the setting information of the past for the test writing area and reproduce a portion in which the test writing is performed, perform the setting process in which the recording laser power and the laser driving pulse are set based on the result of the test writing and the reproduction, and store the setting information of the recording laser power and the laser driving pulse that are set by the setting process in the setting information storing area.

In addition, the control unit, as the test writing using the read-out setting information of the past, may allow the test writing to be performed with the setting information of the recording laser power set as an initial power value of the laser power and the setting information of the laser driving pulse set as a set initial setting value of the laser driving pulse.

In addition, in a case where the setting information of the recording laser power and the laser driving pulse corresponding to the optical recording medium set as the recording target is stored in the setting information storing area, the control unit may use the setting information for the test writing in a case where a recording condition at the time of the setting process in which the stored setting information is acquired and a current recording condition are determined to be in a range in which the conditions can be treated alike. Here, the case where the recording conditions are in the range in which the conditions can be treated alike is a case where a temperature difference between the temperature at the time of the setting process in which the stored setting information is acquired and the current temperature is within a predetermined range or the like.

In addition, as the test writing using the read-out setting information of the past, the control unit may correct the setting information of the recording laser power or the setting information of the laser driving pulse that is read out and allow the test writing to be performed by using the corrected setting information.

For example, the control unit may correct the setting information of the recording laser power or the setting information of the laser driving pulse that is read out, and may allow the test writing to be performed by using the corrected setting information in a case where a recording condition at the time of the setting process in which the stored setting information is acquired and a current recording condition are determined to be in a range in which the conditions can be treated alike.

Alternatively, the control unit may allow the test writing using the setting information of the recording laser power and the setting information of the laser driving pulse that are read out in a case where the recording condition at the time of the setting process in which the stored setting information is acquired and the current recording condition are in a range in which the conditions can be treated alike and allow the test writing to be performed using a corrected setting information by correcting the setting information of the recording laser power or the setting information of the laser driving pulse that is read out in a case where the recording condition at the time of the setting process in which the stored setting information is acquired and the current recording condition are determined not to be in the range in which the conditions can be treated alike.

In such a case, the control unit may allow the test writing to be performed with the corrected setting information of the recording laser power set as initial power of laser power and the corrected setting information of the laser driving pulse as an initial value of the setting of the laser driving pulse.

In addition, the control unit may store unit information that includes information used for identifying the optical recording medium, the setting information of the recording laser power for each recording layer of the optical recording medium, and the setting information of the laser driving pulse for each recording layer of the optical recording medium in the setting information storing area as one unit of the setting information.

The recording device may include a memory unit that is used as the setting information storing area. Alternatively, the control unit may use a part of the area of the optical recording medium set as the recording target or a part of the area of a memory unit of any other device connected thereto as the setting information storing area.

In addition, in a case where a plurality of units of the setting information of the recording laser power and the laser driving pulse corresponding to the optical recording medium set as the recording target are stored in the setting information storing area, the control unit may read out a latest setting information.

Alternatively, in a case where a plurality of units of the setting information are stored, the control unit may read out setting information of which a recording condition is the closest to a current recording condition.

According to another embodiment of the present disclosure, there is provided a recording method for a recording device that includes a recording unit that records information in a recording layer of an optical recording medium through laser beam emission that is performed based on a laser driving pulse. The recording method includes the steps of: reading out setting information of recording laser power and a laser driving pulse of the past that are stored in correspondence with an optical recording medium set as a recording target from a setting information storing area; allowing the recording unit to perform test writing for a test writing area of the recording layer of the optical recording medium using the read out setting information of the past and to reproduce a test writing portion, and performing a setting process in which recording laser power and a laser driving pulse are set based on a result of the test writing and the reproduction; and performing recording with the recording laser power and the laser driving pulse that are set in the setting process.

According to still another embodiment of the present disclosure, there is provided a program that allows an operation processing device to perform the process of each of the above-described steps.

According to some embodiments of the present disclosure, in a case where a setting process (OPC process) for optimizing the recording laser power and the laser driving pulse is performed, the setting information of the recording laser power and the laser driving pulse is stored in the setting information storing area. In the OPC process, first, it is checked whether or not the setting information of an optical recording medium that is loaded and set as a recording target is present in the setting area storing area. In a case where the setting information is present, the setting information is read out, and the OPC process is performed by using the read-out setting information. For example, a center value of the range in which the laser power can be changed is used as the initial value of the pulse setting. By using an appropriate value that is used in the past, the possibility of the occurrence of retries in the OPC is reduced to a large extent, and the time for the process can be reduced.

According to the embodiments of the present disclosure, by using appropriate values, which were used in the past, of the recording laser power and the laser driving pulse, the possibility of the occurrence of retries at the time of the OPC can be reduced to a large extent. Accordingly, the consumption of the OPC performing area (for example, a PCA) on the optical recording medium can be reduced, and the time for the OPC can be shortened.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:
Fig. 1 is a block diagram of a disc drive device according to an embodiment of the present disclosure.
Figs. 2A and 2B are diagrams illustrating an optical disc as a recording target of an embodiment.
Fig. 3 is a diagram illustrating OPC setting information of an embodiment.
Fig. 4 is a diagram illustrating setting of a laser driving pulse according to an embodiment.
Fig. 5 is a flowchart of a process before the start of recording according to a first embodiment.
Fig. 6 is a flowchart of an OPC setting information checking process (Example 1) according to an embodiment.
Fig. 7 is a flowchart of an OPC setting information checking process (Example 2) according to an embodiment.
Fig. 8 is a flowchart of an OPC process according to an embodiment.
Fig. 9 is a flowchart of a process before the start of recording according to a second embodiment.
Fig. 10 is a flowchart of a process before the start of recording according to a third embodiment.
Fig. 11 is a flowchart of a process before the start of recording according to a fourth embodiment.
Fig. 12 is a flowchart of a process before the start of recording according to a fifth embodiment.
Fig. 13 is a flowchart of a process before the start of recording according to a sixth embodiment.
Fig. 14 is a flowchart of a process before the start of recording according to a seventh embodiment.
Fig. 15 is a flowchart of a process before the start of recording according to an eighth embodiment.

### DESCRIPTION OF EMBODIMENTS

Hereinafter, embodiments of the present disclosure will be described in the following order.
1. Configuration of Disc Driver Device
2. OPC Setting Information
3. First Embodiment
4. Second Embodiment
5. Third Embodiment
6. Fourth Embodiment
7. Fifth Embodiment
8. Sixth Embodiment
9. Seventh Embodiment
10. Eighth Embodiment
11. Modified Example
12. Program

### [1. Configuration of Disc Driver Device]

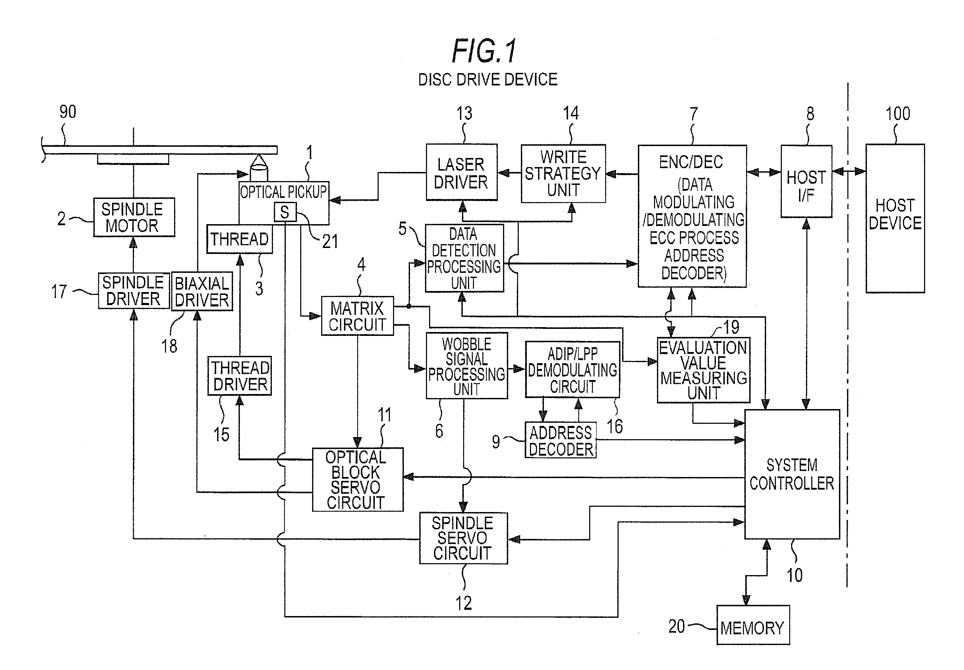

The configuration of a disc drive device as a recording device according to an embodiment of the present disclosure will be described with reference to Fig. 1.

The disc drive device according to this embodiment, for example, is a recording and reproducing device that records and reproduces data on an optical disc such as a Blu-ray disc (registered trademark) or a DVD (Digital Versatile Disc). Particularly, the disc drive device has features relating to an OPC operation for a recordable disc such as a phase-changeable disc or a pigment-changeable disc.

When an optical disc 90 such as a Blu-ray disc or a DVD is loaded into the disc drive device, the optical disc is loaded on a turn table not shown in the figure and is driven so as to turn at a constant linear velocity (CLV) at the time of a recording/reproducing operation by a spindle motor 2.

When the reproducing operation is performed, mark information recorded on tracks formed on the optical disc 90 is read out by an optical pickup 1.

On the other hand, when data is recorded on the optical disc 90, user data is recorded on the tracks formed on the optical disc 90 as a phase change mark or a pigment change mark by the optical pickup 1.

In addition, in the inner circumferential area and the like of the optical disc 90, as reproduction-dedicated management information, for example, physical information and the like of the disc is recorded as embossed pits or wobbling grooves, and the reading of the information is performed also by the optical pickup 1.

Furthermore, for the optical disc 90, ADIP (Address in Pregroove) or LPP (Land Pre Pit) information that is embedded as the wobbling of the groove track on the disc 90 is read out by the optical pickup 1 as well.

Inside the optical pickup 1, a laser diode that serves as a laser beam source; a photodetector that is used for detecting reflection light; an objective lens that is the output end of the laser beam; and an optical system that irradiates a disk recording surface with the laser beam through an objective lens and guides the reflection light thereof to the photodetector, and the like are formed.

The objective lens is held inside the optical pickup 1 using a biaxial mechanism so as to be movable in the tracking direction and the focus direction.

In addition, the entire optical pickup 1 is movable in the radial direction of the disc using a thread mechanism 3.

Furthermore, the laser diode of the optical pickup 1 is driven so as to emit laser beams in accordance with a drive signal (drive current) that is transmitted from the laser driver 13.

In addition, inside the optical pickup 1, a temperature sensor 21, for example, using a thermistor or the like is disposed so as to detect temperature information. The detected temperature information is supplied to a system controller 10. Accordingly, the system controller 10 can acquire the temperature information during recording.

The information on the reflection light reflected from the disc 90 is detected by the photodetector and is converted into an electric signal according to the intensity of the received light so as to be supplied to a matrix circuit 4.

The matrix circuit 4 includes a current-to-voltage conversion circuit, a matrix calculation/amplification circuit, and the like in correspondence with output currents that are output from a plurality of light receiving devices as photodetectors and generates a necessary signal through a matrix calculation process.

For example, the matrix circuit 4 generates a reproduction information signal (RF signal) corresponding to reproduction data, a focus error signal that is used for servo control, a tracking error signal, and the like.

In addition, the matrix circuit 4 generates a push-pull signal as a signal relating to the wobbling of the groove, that is, a signal used for detecting the wobbling.

The RF signal output from the matrix circuit 4 is supplied to a data detection processing unit 5 and an evaluation value measuring unit 19, the focus error signal and the tracking error signal are supplied to an optical block servo circuit 11, and the push-pull signal is supplied to a wobble signal processing circuit 15.

Here, the matrix circuit 4 may be disposed inside the optical pickup 1.

The data detection processing unit 5 performs a binarization process for the RF signal.

For example, the data detection processing unit 5 performs an A/D conversion process of the RF signal, a reproduction clock generating process using a PLL, a PR (Partial Response) equalizing process, a Viterbi decoding process (maximum-likelihood decoding method), and the like and acquires a binary data array through a partial response maximum-likelihood decoding process (PRML detecting method).

Then, the data detection processing unit 5 supplies the binary data array as information read out from the optical disc 90 to an encoding/decoding unit 7 that is disposed on the latter stage.

The encoding/decoding unit 7 performs a decoding process of reproduction data during reproduction and performs a modulation process of recording data during recording. In other words, the encoding/decoding unit 7 performs a data demodulating process, a de-interleaving process, an ECC decoding process, an address decoding process, and the like during reproduction, performs an ECC encoding process, an interleaving process, a data modulating process, and the like during recording.

During reproduction, the binary data array that is decoded by the data detection processing unit 5 is supplied to the encoding/decoding unit 7. The encoding/decoding unit 7 acquires the reproduction data from the optical disc 90 by performing the demodulating process of the binary data array.

The encoding/decoding unit 7 performs a demodulating process, an ECC decoding process as an error correcting process, and the like for data, for example, for which a run-length limited code modulating process is performed and recorded on the optical disc 90, thereby acquiring reproduction data from the optical disc 90.

The data decoded as the reproduction data by the encoding/decoding unit 7 is transferred to the host interface 8 and is transferred to the host device 100 based on an instruction of the system controller 10. Here, the host device 100 is, for example, a computer device, an AV (Audio-Visual) system device, or the like.

When data is recorded on or reproduced from the optical disc 90, ADIP/LPP information is processed.

In other words, the push-pull signal that is output from the matrix circuit 4 as a signal relating to the wobbling of the groove is formed as digitalized wobble data by the wobble signal processing circuit 6. In addition, through the PLL process, a clock that is synchronized with the push-pull signal is generated.

The wobble data is demodulated to be a data stream configuring an ADIP address using the ADIP/LPP demodulating circuit 16 and is supplied to an address decoder 9.

The address decoder 9 decodes the supplied data so as to acquire an address value and supplies the address value to the system controller 10.

During recoding, the recording data is transferred from the host device 100, and the recording data is supplied to the encoding/decoding unit 7 through the host interface 8.

In this case, the encoding/decoding unit 7 performs an error correction code adding (ECC encoding) process, an interleaving process, a sub-code adding process, or the like as the encoding process of the recording data. In addition, the encoding/decoding unit 7 performs a run-length limited code modulating process for the data for which such a process has been performed.

The recording data processed by the encoding/decoding unit 7 is formed as a laser driving pulse in a state in which fine adjustment of optimal recording power, adjustment of a pulse waveform, or the like of the characteristics of the recording layer, the spot shape of a laser beam, the recording linear velocity, and the like has been performed as a recording compensation process by a write strategy unit 14, and the laser driving pulse is supplied to the laser driver 13.

Then, the laser driver 13 supplies the laser driving pulse for which the recording compensation process has been performed to the laser diode disposed inside the optical pickup 1 so as to perform the driving of laser beam emission. Accordingly, a mark corresponding to the recording data is formed on the optical disc 90.

In addition, the laser driver 13 includes a so-called APC (Auto Power Control) circuit, and controls the output of the laser beam so as to be constant without being dependent on the temperature or the like while monitoring the laser output power based on the output of a laser power monitoring detector disposed inside the optical pickup 1.

The target values of the laser output levels during recording and during reproduction are given from the system controller 10, and the laser driver 13 controls the laser output levels during recording and during reproduction to be the target values.

The laser power level and the waveform of the laser driving pulse that are optimal during recording are set by an OPC process to be described below.

The optical block servo circuit 11 generates various servo drive signals such as a focus signal, a tracking signal, and a thread signal based on the focus error signal and the tracking error signal transmitted from the matrix circuit 4 so as to allow a servo operation to be performed.

In other words, the optical block servo circuit 11 generates a focus drive signal and a tracking drive signal in accordance with the focus error signal and the tracking error signal and drives a focus coil and a tracking coil of the biaxial mechanism disposed inside the optical pickup 1 by using the biaxial driver 18. Accordingly, a tracking servo loop and a focus servo loop are formed by the optical pickup 1, the matrix circuit 4, the optical block servo circuit 11, the biaxial driver 18, and the biaxial mechanism.

In addition, the optical block servo circuit 11 performs a track jumping operation by turning off the tracking servo loop and outputting a jump drive signal in accordance with a track jumping instruction transmitted from the system controller 10.

Furthermore, the optical block servo circuit 11 drives the thread mechanism 3 using the thread driver 19 by generating a thread drive signal based on the thread error signal acquired as a low band component of the tracking error signal or access control of the system controller 10, and the like. The thread mechanism 3, although not shown in the figure, includes a main shaft that holds the optical pickup 1, a thread motor, and a mechanism configured by a transfer gear and the like, and by driving the thread motor in accordance with the thread drive signal, a sliding movement that is necessary for the optical pickup 1 is performed.

The spindle servo circuit 12 controls the spindle motor 2 so as to perform CLV rotation.

The spindle servo circuit 12 generates a spindle error signal by acquiring a clock that is generated through a PLL process for the wobble signal as the current rotation speed information of the spindle motor 2 and comparing the rotation speed information with predetermined CLV reference speed information.

In addition, the reproduction clock that is generated by the PLL disposed inside the data signal processing circuit 5 is the current rotation speed information of the spindle motor 2 at the time of reproducing data. Accordingly, by comparing the rotation speed information with the predetermined CLV reference speed information, the spindle error signal can be generated as well.

Then, the spindle servo circuit 12 performs the CLV rotation of the spindle motor 2 using the spindle driver 17 by outputting a spindle drive signal that is generated in accordance with the spindle error signal.

In addition, the spindle servo circuit 12 performs an operation of the spindle motor 2 such as startup, stop, acceleration, deceleration, or the like by generating a spindle drive signal in accordance with a spindle kick/brake control signal transmitted from the system controller 10.

The above-described various operations of the servo system and the recording and reproducing system are controlled by the system controller 10 that is configured by a microcomputer.

The system controller 10 performs various processes in accordance with a command supplied from the host device 100 through the host interface 8.

For example, in a case where a write command is output from the host device 100, the system controller 10, first, moves the optical pickup 1 to an address at which data is to be written. Then, the system controller 100 performs an encoding process for the user data (for example, video data, audio data, or the like) transferred from the host device 100 by using the encoding/decoding unit 7 as described above. Thereafter, as the laser driver 13 drives the laser emission in accordance with the data encoded as described above, recording is performed.

On the other hand, for example, in a case where a read command demanding to transfer data recorded on the optical disc 90 is supplied from the host device 100, the system controller 10 controls a seek operation for the address instructed first as a target. In other words, the system controller 10 instructs the optical block servo circuit 11 to perform an access operation of the optical pickup 1 with the address, which is designated by the seek command, used as a target.

Thereafter, the system controller 10 performs operation control that is necessary for transferring the data included in an instructed data section to the host device 100. In other words, the system controller 10 reads out data from the disc 90, allows the data detection processing unit 5 and the encoding/decoding unit 7 to perform a reproduction process, and transfer the demanded data.

The RF signal acquired by the matrix circuit 4 is also supplied to the evaluation value measuring unit 19.

The evaluation value measuring unit 19 measures an evaluation value of the reproduced RF signal and supplies the evaluation value to the system controller 10 when an OPC operation to be described below is performed.

For example, the evaluation value measuring unit 19 measures a β value, the degree of modulation, asymmetry, a jitter value, the amplitude of an RF signal, and the like.

Alternatively, an error rate may be used as the evaluation value. In such a case, information on the result of an error correcting process performed by the encoding/decoding unit 7 is supplied to the evaluation value measuring unit 19, and an error rate is calculated.

Here, the β value is a value that is acquired based on a peak value Ip and a bottom value Ib of the reproduced RF signal by using "β = (Ip+Ib) / (Ip-Ib) ".

In addition, the jitter is represented as σ/T by using a standard deviation σ and 1T as a deviation from the defined clock. It can be stated that the greater the value of the jitter, the further the reproduced signal is degraded. For a Blu-ray disc in which a recording layer is configured as one layer dedicated to reproduction, although the jitter is defined as being equal to or less than 6.5% in the specifications, apparently, it is preferable that the jitter is low as can be.

Assuming that the peak value of a 8T signal is Ip8, the bottom value of the 8T signal is Ib8, the peak value of a 2T signal is Ip2, and the bottom value of the 2T signal is Ib2, the asymmetry is represented by {(Ip8+Ib8)-(Ip2+Ib2)}/{2(Ip8-Ib8)} and indicates the deviation between the center axes of the 8T signal and the 2T signal. This asymmetry is an index that is important for determining the binarized thread. In the specifications of the Blu-ray disc, the asymmetry is defined as being in the range of -10% to 15%. However, ordinarily, the asymmetry is preferably in the range of 0% to 10%.

The degree of modulation is represented as (Ip8-Ib8) / (Ip8) . This is the magnitude of the 8T amplitude and is an index that depends on the depth of the 8T pit. It can be stated that the greater this value is, further the C/N ratio is improved.

A memory unit 20 stores therein parameters, constants, and the like that are used for various processes by the system controller 10. For example, the memory unit 20 is configured by a non-volatile memory.

For example, the memory unit 20 is used as a setting information storing area in which OPC setting information to be described below is stored.

In addition, as a setting information storing area, an example may be considered in which the memory 20 disposed inside the disc drive device is not used. In this example, while the system controller 10 stores the OPC setting information as a result of the OPC process in a setting information storing area, the setting information storing area may use a part of a storage area such as a memory or a hard disk disposed inside the host device 100 connected thereto. Alternatively, a predetermined area of a loaded optical disc 90 may be used. For example, since an area that can be arbitrarily used by the disc drive device is arranged in a read-in area or the like of the optical disc 90, the area may be considered to be used.

In the example illustrated in Fig. 1, although the disc drive device connected to the host device 100 has been described, a disc drive device having a form that is not connected to other devices may be used. In such a case, the configuration of a data input/output interface portion, in which an operation unit or a display unit is disposed, is different from that illustrated in Fig. 1. In other words, it is preferable that a terminal portion is formed which is used for recording or reproducing data in accordance with a user operation along with use for the input/output of various types of data. It is apparent that other various examples of the configuration of the disc drive device may be considered.

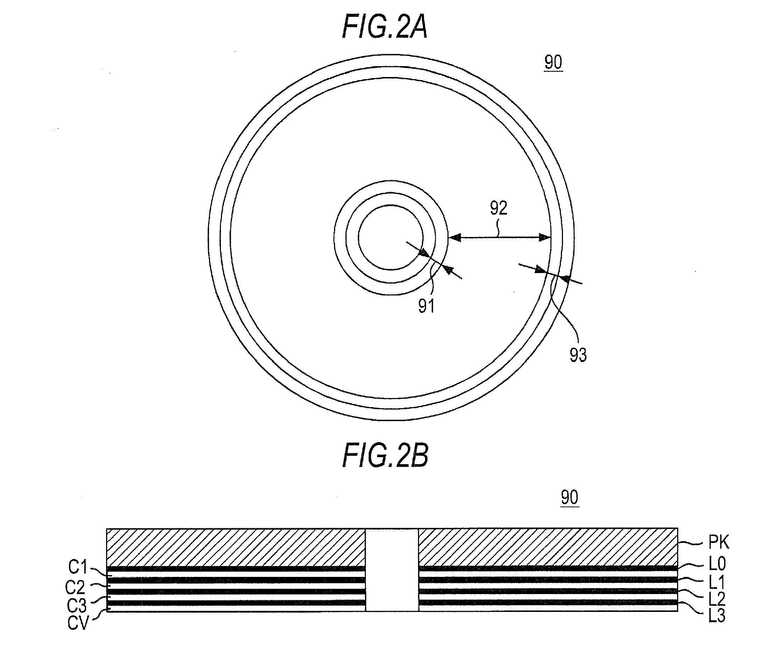

Figs. 2A and 2B illustrates a schematic configuration of an optical disc 90. Fig. 2A illustrates a case where the optical disc 90 is viewed in a plane and illustrates the configuration of areas in the radial direction thereof.

The optical disc 90 is, for example, configured as a disc recording medium having a diameter of 12 cm, and the area structure thereof is broadly divided into an inner circumferential area 91, a data zone 92, and an outer circumferential area 93.

The data zone 92 is a main recording area, and so-called user data is recorded therein. The user data described here is main target data to be stored on the optical disc 90 such as video data, audio data, text data, computer use data or a software program.

The inner circumferential area 91 is used as a so-called management area. In the case of a one-layer disc in which the number of recording layers is one, the inner circumferential area 91 is an area that is used as a so-called a read-in zone. In the case of a multi-layered disc in which the number of recording layers is two or more, the inner circumferential area is used as a read-in zone, an inner-zone, a read-out zone for each layer. In the inner circumferential area 91, physical information of the disc, setting information for a recording/reproducing operation, information used for managing the configuration or the alteration of the areas, a test writing area, and the like are formed.

The outer circumferential area 91 is an area that is used as a so-called a read-out zone in the case of a one-layer disc. In the case of a multi-layered disc in which the number of recording layers is two or more, the outer circumferential area is use as a read-out zone or an outer zone for each layer.

Fig. 2B schematically illustrates a layer structure in a case where the optical disc 90 is a four-layer Blu-ray disc.

In the optical disc 90, a concave-convex shape as wobbling grooves is formed on one face of a disc substrate PK that is molded through an injection molding or the like, for example, using polycarbonate or the like, a reflective film or a recording material layer is formed as a film, and a first recording layer L0 is formed.

In addition, an intermediate layer C1 is formed on the recording layer L0. On the face of the intermediate layer C1, a concave-convex shape as wobbling grooves is formed, and a semi-transmissive/semi-reflective film or a recording material layer is formed thereon as a film, and a second recording layer L1 is formed.

Furthermore, an intermediate layer C2 is formed on the recording layer L1. On the face of the intermediate layer C2, a concave-convex shape as wobbling grooves is formed, and a semi-transmissive/semi-reflective film or a recording material layer is formed thereon as a film, and a third recording layer L2 is formed.

In addition, on the recording layer L2, an intermediate layer C3 is formed. On the face of the intermediate layer C3, a concave-convex shape as wobbling grooves is formed, and a semi-transmissive/semi-reflective film or a recording material layer is formed thereon as a film, and a fourth recording layer L3 is formed.

On the recording layer L3, a cover layer CV is formed.

In addition, in each of the recording layers L0, L1, L2, and L3, there is a portion such as a part of the inner circumferential area 91 in which an embossed pit row is formed.

In practice, the thickness of the optical disc 90 is about 1.2 mm, and the thickness of the disc substrate PK is about 1.1 mm. In addition, between a thickness of about 100 µm, from the recording L0 up to the cover layer CV are formed.

In Fig. 2B, although a case of a four-layer disc is illustrated as an example, a three-layer disc or a disc of five or more layers is also formed so as to have a similar structure by adjusting the thickness of the intermediate layer or the cover layer.

### [2. OPC Setting Information]

In the disc drive device of this example, although an OPC operation is performed before a recording operation, the OPC operation performs not only the optimization of the recording laser power but also the optimization of the waveform of a laser driving pulse.

When briefly described, in the OPC operation, test writing is performed for the PCA (Power Calibration Area) of the optical disc 90 that is loaded and set as a recording target while changing the laser power level or the pulse wavelength. Then, a portion for which the test writing is performed is reproduced, and the optimal recording laser power or the optimal laser driving pulse is determined based on evaluation values such as the β value, the jitter, and the like described above and is set so as to be used for actual recording after that.

Here, generally, the PCA is arranged within the arrangement area of the inner circumferential area 91 of the optical disc 90. In addition, the PCA may be arranged in the outer circumferential area 93. In any case, the PCA has a limited area. Thus, particularly, in the case of a write-once type optical disc 90, it is not preferable that retries are repeated in the OPC operation so as to consume the PCA. In addition, the increase in the number of retries without somehow determining the optimal setting is also not preferable from the point that time is necessary until an actual recording operation is performed.

Thus, in this example, the setting information as the result of the OPC operation, that is, the setting information of the optimal recording laser power and the optimal laser driving pulse (the OPC setting information) is stored in the above-described setting information storing area (for example, the memory 20) . Then, When the OPC operation is performed, the OPC setting information stored in the setting information storing area is checked, and an effective OPC operation is performed by using the OPC setting information as possibly as can.

In this example, the system controller 10 stores the OPC setting information per unit.

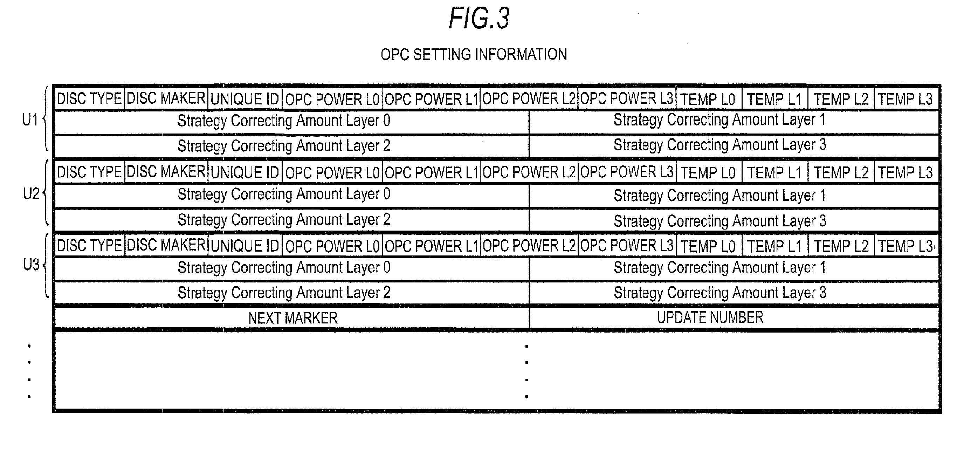

An example of the content of the OPC setting information is illustrated in Fig. 3.

Fig. 3 illustrates the appearance of storing the OPC setting information in the setting information storing area in units of U1, U2, U3 ....

The information included in one unit is as follows.

Disc Type represents the type of a disc 90 for which the OPC is performed. For example, a type such as a CD-R, a CD-RW, a DVD-R, a DVD-RW, a DVD+R, a DVD+RW, a DVD-RAM, a BD-R, or a BD-RE or the number of recording layers.

Disc Maker is information that represents the name of the manufacturer of the disc 90 for which the OPC is performed.

A unique ID is an identification number that is uniquely assigned to a disc 90 for which the OPC is performed. For example, when the OPC is performed for an optical disc 90 for the first time, the system controller 10 or the host device 100 generates a random number, and the random number is an identification number that is recorded on the optical disc 90 as a unique ID.

OPC power (OPC Power L0, ... , OPC Power L3) is the value of optimal recording laser power that is set by the OPC operation performed for each of the recording layers L0, L1, L2, and L3 of the optical disc 90.

Temperature Information (Temp L0, ..., Temp L3) is the value of an environmental temperature that is detected by the sensor 21 when the OPC operation is performed for each of the recording layers L0, L1, L2, and L3 of the optical disc 90.

A strategy correction amount (Strategy Correction Amount Layer 0, ..., Strategy Correction Amount Layer 3) is a setting value of an optimal laser driving pulse that is set by the OPC operation performed for each of the recording layers L0, L1, L2, and L3 of the optical disc 90.

A next marker (Next Marker) represents the recording start position of the next unit in the setting information storing area.

An update number (Update Number) represents the number of updates.

For example, the above-described OPC setting information is additionally recorded per unit in accordance with an OPC operation.

The information illustrated in Fig. 3 is merely an example. For example, when a one-layer disc is a target, the information of the recording layers L2 to L4 is not necessary. In addition, the content of the information may be changed in accordance with the disc type. Furthermore, information of the recording linear velocity (the number of revolutions) during recording (and at the time of the OPC operation) may be considered so as to be added.

In the OPC operation of this example, the optimal recording laser power and the optimal laser driving pulse are set.

Generally, in order to determine the optimal recording laser power, the test writing is performed while changing the recording laser power in a given range in a stepped manner. By checking the evaluation values (the β value and the like) acquired when the portion for which the test writing has been performed is reproduced, a laser power level having the greatest recording characteristics in the range in which the recording laser power is changed can be determined.

However, in a case where the β value, the jitter, or the like does not reach a necessary value or a further different laser power level is estimated to be desirable, an OPC retry is performed. In a case where test writing is performed while changing the laser power in the range of 5 mW to 10 mW, it is assumed that the laser power is the minimum when the jitter value is 10 mW. In this case, when the laser power is further raised, the jitter value is estimated to be lowered further. Thus, the test writing is performed while changing the laser power, for example, in the range of 9 mW to 14 mW. Here, in a case where the jitter value at the time when the laser power level is 12 mW is the minimum, 12 mW can be determined as the optical laser power.

As above, a laser power level at which the evaluation value is optimal is determined while changing the laser power in a given range.

The setting of the laser driving pulse may be considered in a similar manner.

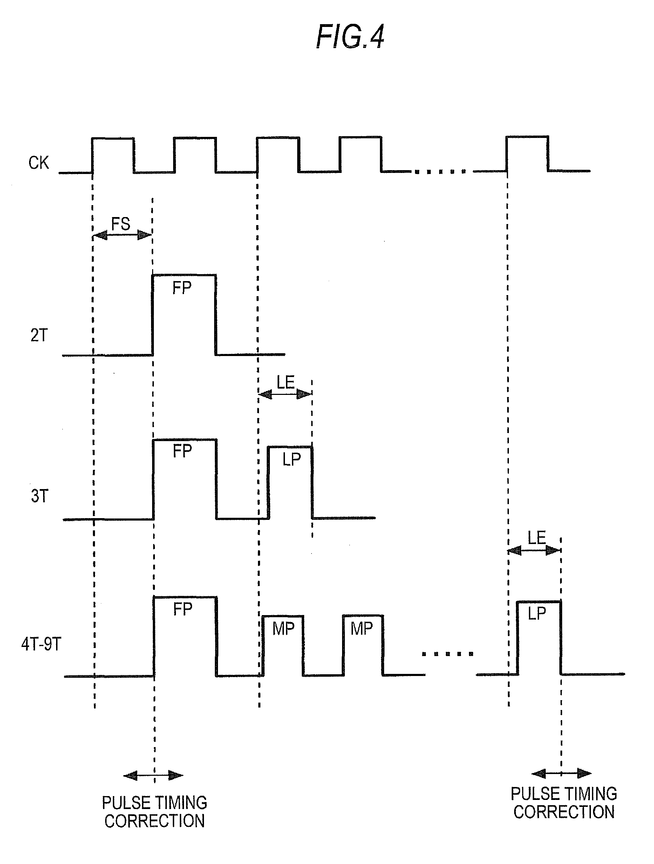

Fig. 4 illustrates an example of laser driving pulses corresponding to pit lengths of 2T to 9T.

A laser driving pulse corresponding to 2T is configured by a first pulse FP having a specific level and a specific pulse width.

A laser driving pulse corresponding to 3T is configured by a first pulse FP and a last pulse LP each set to have a specific level and a specific pulse width.

The laser driving pulse corresponding to 4T to 9T is configured by a first pulse FP, multiple pulses MP, and a last pulse LP that are respectively set to have a specific level and a specific pulse width. 4T to 9T have patterns in which the numbers of the multiple pulses MP arranged between the corresponding first pulse FP and the corresponding last pulse LP differ from each other.

The write strategy unit 14 can generate a laser driving pulse, for example, of 2T to 9T based on recording data as above and can correct the pulse pattern based on an instruction of the system controller 10.

As the correction of the pulse pattern, correction of the timing of a rising edge of the first pulse FP and correction of the timing of a falling edge of the last pulse LP are performed as illustrated in Fig. 4.

The timing of the rising edge of the first pulse FP is regulated to be an interval FS with respect to a channel clock CK as a reference. By setting the interval FS, the timing of the rising edge can be changed back and forth in time.

The timing of the falling edge of the last pulse LP is regulated to be an interval LE with respect to the channel clock CK as a reference. By setting the interval LE, the timing of the falling edge can be shifted back and forth in time.

By performing the test writing while changing the pulse edge timing at the time of the OPC and checking an evaluation value, an optimal laser driving pulse is set.

The setting of the laser driving pulse may be the setting thereof at other timings. For example, an optimal setting may be acquired by changing the timing of the falling edge of the first pulse FP, the timing of the rising edge or the falling edge of the multiple pulse MP, the timing of the rising edge of the last pulse LP, and the like. In addition, an optimal setting may be determined by changing the pulse levels of the first pulse FP, the multiple pulse MPs, and the last pulse LP.

It is apparent that the waveform of the laser driving pulse also is not limited to the waveform as illustrated in Fig. 4 and may be considered to have various waveforms. Fig. 4 is a merely an example. For example, the waveform of a laser driving pulse may differ based on the disc type, whether the disc is the write-once-type or the rewritable type, and the like. Even for a different waveform of the laser driving pulse, by the setting of the optimal laser driving pulse, the pulse edge timing and the pulse laser thereof are adjusted.

### [3. First Embodiment]

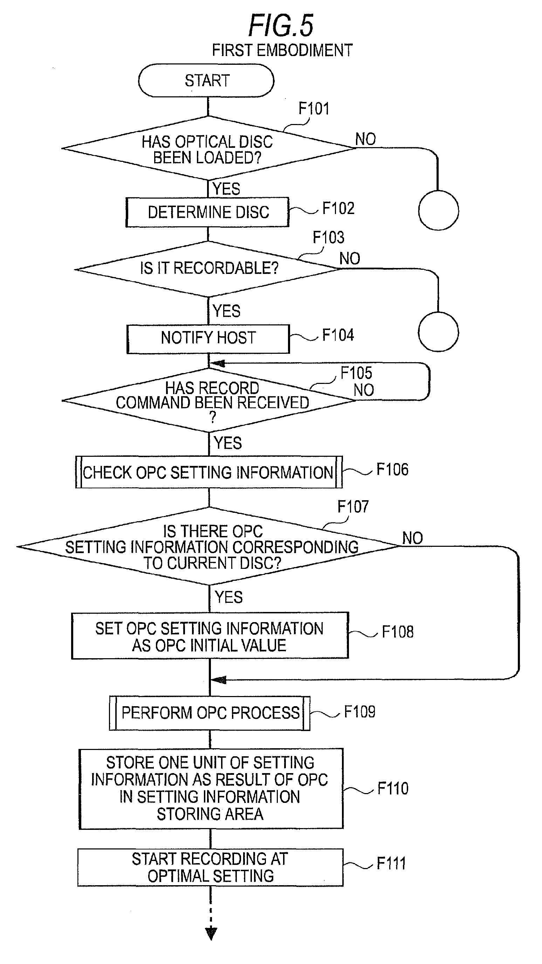

The process of a disc drive device according to a first embodiment will be described with reference to Fig. 5. In the description of each of embodiments presented below, the process of a system controller 10 after an optical disc 90 is loaded is illustrated. However, the process performed in a case where the loaded optical disc 90 is a non-recordable optical disc, a case where a reproduction command is issued from a host device 100, or the like is not directly related to an embodiment of the present disclosure, and thus the description thereof is omitted. Thus, hereinafter, the description will be presented on a premise that a recordable optical disc 90 is loaded, and then a record command is issued from the host device 100.

When detecting the loading of the optical disc 90 into the disc drive device, the system controller 10 advances the process illustrated in Fig. 5 from Step F101 to Step F102 and performs a disc determining process, whereby determining whether or not the loaded optical disc 90 is a recordable disc.

In this case, for example, the system controller 10 reads out the management information of the optical disc 90 and checks the disc type, the disc maker, a unique ID that is unique to a disc, the disc closing state, and the like.

In a case where the loaded optical disc 90 is a recordable disc such as a BR-R, a BD-RE, a DVD-R, or the like as the type and is not a disc for which a so-called closing process has not been processed, the system controller 10 determines the optical disc as recordable. Here, the closing process is a process for fixing the recording state of a disc, so that it is difficult to additionally write data thereon thereafter, and the disc is used only for reproduction.

In a case where the loaded optical disc is not a recordable disc, although not illustrated in the figure, the system controller 10 notifies the host device 100 of the disc type or being a non-recordable disc, and waits for a reproduction command. In this case, an error process may be performed for a non-compatible disc depending on the situations.

On the other hand, in a case where the loaded optical disc is a recordable optical disc 90, the system controller 10 proceeds from Step F103 to Step F104 and notifies the host device 100 of being a recordable disc. Then, the system controller 10 waits for the reception of a record command (here, the description in the case of reception of a reproduction command is omitted).

In a case where the record command is received, the system controller 10 performs an OPC process and then controls a demanded recording operation in Step F106 and after that.

In Step F106, it is checked whether OPC setting information corresponding to the optical disc 90 that is currently loaded and is set as a recording target is stored in the setting information storing area.

Although an example of this checking process will be described below, first, a case will be described in which the loaded optical disc 90 is a disc that is loaded for the first time and the corresponding OPC setting information is not stored.

In a case where the OPC setting information corresponding to the optical disc 90 that is the current recording target is not present in the setting information storing area, the system controller 10 advances the process from Step F107 to Step F109 and performs an OPC process.

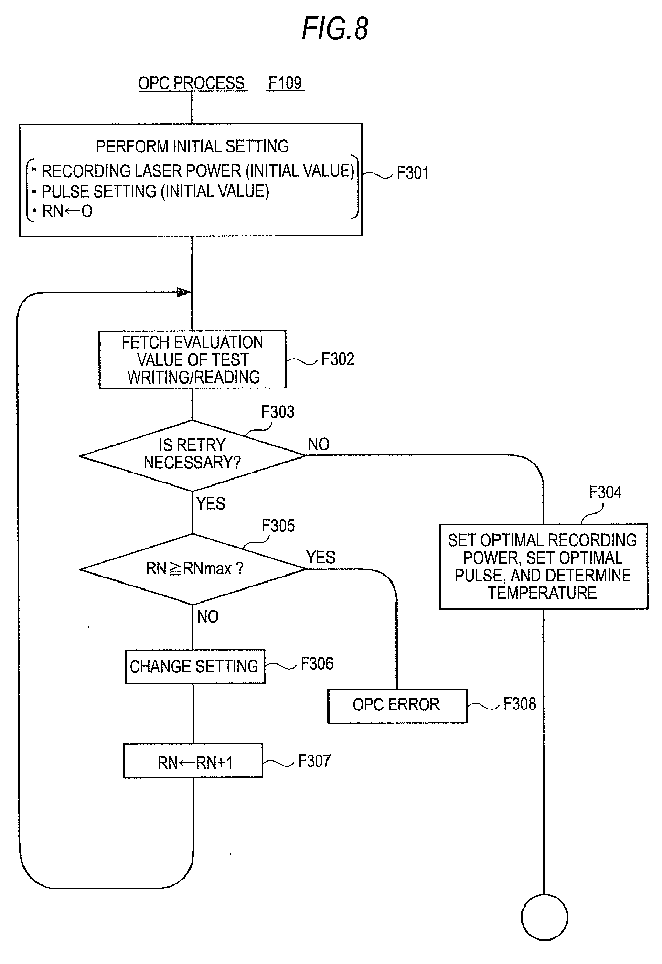

An example of the OPC process that is performed by the system controller 10 in Step F109 is illustrated in Fig. 8.

First, in Step F301, an OPC initialization setting is performed. Here, the initial value of the recording laser power and the initial value of the setting of the laser driving pulse are set.

The initial value of the recording laser power is a center value of a range in which the recording laser power is changed. As this initial value, a fixed value is determined. For example, a specific initial value of the laser power is determined in advance for each disc type.

For example, in a case where the laser power is changed in a stepped manner in the range of 5 mW, and the power initial value of the laser power is set as 7 mW, test writing is performed by changing the laser power in the range of 5 mW to 9 mW.

In addition, the initial value of the laser driving pulse is a value, for example, that is predetermined for each disc type. For example, assuming that each pulse illustrated in Fig. 4 is set to its initial state, the values of the intervals FS and LE illustrated in the figure are determined as initial values.

As above, as the initial setting of the OPC in Step F301, a defined initial value of that is prepared in advance is set.

In addition, the system controller 10 resets the counting value RN of the number of test writing operations for the OPC to zero.

Although the procedure of the OPC may be considered in various manners, here, as an example, a procedure is taken in which, first, an optimal value of the recording laser power is searched while the laser driving pulse is fixed to the initial setting state, an optimal value of the recording laser power is acquired, thereafter, the recording laser power is fixed to the optimal value, and the setting of the optimal laser driving pulse is searched.

When the initial setting is completed, the system controller 10 performs OPC control in Step F302. In other words, the system controller 10 performs control of test writing, the control of reproduction of a portion written by the test writing, and the fetching of evaluation values.

In this case, the system controller 10, first, moves the optical pickup 1 to the PCA of the disc 90. Then, the system controller 10 outputs data for the test writing (test data) from the encoding/decoding unit 7. For example, the test data may be random data. In addition, the system controller 10 controls the laser driver 13 so as to change the laser power in a stepped manner based on the above-described initial setting.

Accordingly, the test data is recorded in the PCA of the optical disc 90 with multiple levels of the recording laser power.

When the test writing is completed, next, the system controller 10 allows the optical pickup 1 to access a leading address of the area in which the test writing has been performed. Then, the system controller 10 reproduces the portion recorded in advance by the test writing.

At this time, the reproduction RF signal is supplied from the matrix circuit 4 to the evaluation value measuring unit 19, and for example, the β value is measured by the evaluation value measuring unit 19. The system controller 10 fetches the β values measured during the reproduction period, that is, β values corresponding to each of the multiple levels of the recording laser power from the evaluation value measuring unit 19.

As described above, as the evaluation value, a jitter value, the asymmetry, the degree of modulation, an error rate, or the like other than the β value may be used, a plurality of types of evaluation values may be used.

When the evaluation value is fetched, the system controller 10 determines whether optimal recording laser power can be determined in the laser power range in which the test writing has been performed based on the evaluation value. In a case where the optimal recording laser power is estimated not to be in the range in which the test writing is performed, the system controller 10 determines that a retry is necessary and proceeds from Step F303 to Step F305.

In Step F305, it is determined whether or not the number RN of the test writing operations reaches a retry number upper limit RNmax.

In a case where the number RN of the test writing operations does not reach the retry number upper limit RNmax, the setting is changed in Step F306. For example, in a case where the optimal recording laser power has not been determined yet, the setting of the range of the laser power to be changed is changed.

Then, the number RN of the test writing operations is incremented in Step F307, the process is returned back to Step F302, and the control of the test writing, the control of reproduction of the portion written by the test writing, and the fetching of the evaluation value described above are performed.

It is assumed that, as a result of the first test writing operation or the second or later test writing operation, the optimal recording laser power can be determined based on the estimation value.

In the case of this example, since the optimal pulse setting is further performed, the OPC is not completed at that time point, and the process proceeds to Steps F303 -> F305 -> F306. Then, in this case, the laser power is set to be fixed to the recording laser power determined to be optimal, and the laser driving pulse is set to be changed in a stepped manner in a range before and after the initial value as a center value.

Then, the value of the number RN of the test writing operations is incremented in Step F307, then, the process is returned back to Step F302, and the control of the test writing process, the control of reproduction of the written portion written by the test writing, and the fetching of the evaluation value described as above are performed.

In the test writing at this time, while the recording laser power is fixed to the optimal recording laser power, the setting of the laser driving pulse (for example, the timing of the rising edge of the first pulse FP or the timing of the falling edge of the last pulse LP) is changed in a stepped manner.

Then, the reproduction thereof is performed so as to fetch the evaluation value, and the setting of the optimal laser driving pulse is determined. Depending on the situations, a retry is further performed, and the setting of the optimal laser driving pulse is searched.

When the setting of the optimal laser driving pulse is determined, the system controller 10 proceeds from Step F303 to Step F304, and the setting of the recording laser power and the laser driving pulse that are determined to be optimal is fixed.

In addition, at this time, the system controller 10 checks the temperature detection information transmitted from the sensor 21 so as to determine the current environmental temperature. Here, the determination of the temperature may not be performed at this timing, and the temperature in the OPC process may be detected.

As above, a series of the OPC processes is completed.

However, there is a case where the retry number upper limit is reached without determining the recording laser power and the laser driving pulse that are optimal. In such a case, the process proceeds from Step F305 to Step F308, and a process as an OPC error process is performed.

In the description presented as above with reference to Fig. 8, only a process in a case where the test writing is performed for one recording layer has been described for the simplification of the description. However, there is a case where the OPC process is continuously performed for each of the recording layers as an OPC process for a multiple-layer disc.

For example, in the case of a four-layer disc, the OPC process that is the same as that illustrated in Fig. 8 described above is sequentially performed for each of the recording layers L0, L1, L2, and L3, and the setting of the recording laser power and the laser driving pulse that are optimal for each recording layer is determined.

In addition, there is a technique in which an OPC process for a recording layer for which recording is to be started is performed without performing the OPC process for all the recording layers at once.

In addition, the above-described OPC process is merely an example. For example, an example of a process in which the recording laser power and the laser driving pulse are simultaneously changed in one test writing operation may be considered.

Furthermore, there is also an example of a process in which, after the optimal setting of the laser driving pulse is determined, the optimal power of the recording laser power is determined in the state in which the laser driving pulse is set.

The description will be continued with reference back to Fig. 5.

When the OPC process is performed for the loaded optical disc 90, the system controller 10 proceeds to Step F110 and stores one unit of the setting information as a result of the OPC in the setting information storing area.

In other words, one setting information unit as illustrated in Fig. 3 is generated and is stored as unit U(x).

In this case, the disc type is a value on the basis of the disc type determined in Step F102.

The disc maker is a value on the basis of the maker information read out from the management information of the optical disc 90 at the time of determination in Step F102.

As the unique ID, the unique number that is generated by the host device 100 or the system controller 10 is assigned to this optical disc 90.

Furthermore, this unique number is also recorded in the optical disc 90 at this time point or a predetermined time point such as a management information updating time point after a recording operation.

The OPC power (OPC Power L0, ..., OPC Power L3) is a value of the optimal recording laser power for each recording layer that has been set through the previous OPC process. In addition, in a case where the optical disc 90 is a multiple-layer disc, when the OPC process is performed for each recording layer, the recording laser power for each recording layer is stored. On the other hand, in a case where the OPC process is performed only for a part of the recording layers, although the recording laser power information for a recording layer for which the OPC process has not been performed may be set to blank, the value of the recording laser power for a recording layer for which the OPC process has not been performed may be calculated by using a coefficient corresponding to the recording layer and be stored. For example, in a case where the OPC process is performed for the recording layer L0, coefficient calculation for each of the recording layers L1, L2, and L3 is performed for the optimal recording laser power of the recording layer L0, and the recording laser power that is appropriate for each of the recording layers L1, L2, and L3 is acquired and stored.

As the temperature information, for example, as in Step F304 illustrated in Fig. 8, the temperature information detected at the time of the OPC process is stored. In a case where the OPC process is performed for each recording layer, the value of the temperature at each OPC process is stored as the temperature information (Temp L0, ..., Temp L3).

The strategy correcting amounts (Strategy Correcting Amount Layer 0, ... , Strategy Correcting Amount Layer 3) are the values (for example, the values of FS and LE illustrated in Fig. 4) of the setting of the laser driving pulse that is optimal for each recording layer set in the previous OPC process. In addition, in a case where the optical disc 90 is a multiple-layer disc, when the OPC process is performed for each recording layer, the strategy correcting amount for each recording layer is stored. On the other hand, in a case where the OPC process is performed only for a part of the recording layers, although the strategy correcting amount of a recording layer for which the OPC process has not been performed may be set to blank, the value of the strategy correcting amount of the laser driving pulse for the recording layer for which the OPC process has not been performed may be calculated by using a coefficient corresponding to the recording layer and be stored.

The system controller 10, for example, generates data of one setting information unit and stores the data in the setting information storing area (for example, the memory 20).

Alternatively, in a case where the setting information storing area is arranged in the memory arranged inside the host device 100, the system controller 10 transfers the data of the setting information unit to the host device 100 and demands the data to be stored by the host device 100.

Furthermore, in a case where the setting information storing area is a predetermined area of the optical disc 90, the system controller 10 generates recording data based on the setting information unit and transfers the recording data to the encoding/decoding unit 7. Then, the information of the corresponding setting information unit is recorded on the optical disc 90 through the operations of the encoding/decoding unit 7, the write strategy unit 13, the laser driver 13 and the optical pickup 1. In addition, in a case where the setting information storing area is the predetermined area of the optical disc 90, the writing of the setting information unit onto the optical disc 90 may be performed not at the timing of Step F110 but at the time of updating the management information after a recording operation performed thereafter.

When the process of storing the setting information unit is performed in Step F110, the system controller 10 proceeds to Step F111 and starts a recording operation that is demanded from the host device 100 . At this time, the system controller 10 instructs the write strategy unit 14 to set an optimal laser driving pulse, instructs the laser driver 13 to have the optimal recording laser power, and performs a recording operation.

Until now, as the process of Step F106, a case has been described in which the OPC setting information corresponding to the optical disc 90 that is the current recording target is not present.

On the other hand, in a case where an optical disc 90 for which the OPC operation and the recording operation are performed at least once or more is loaded, one unit or a plurality of units of the OPC setting information are stored in the setting information storing area in correspondence with the optical disc 90.

Hereinafter, such a case will be described.

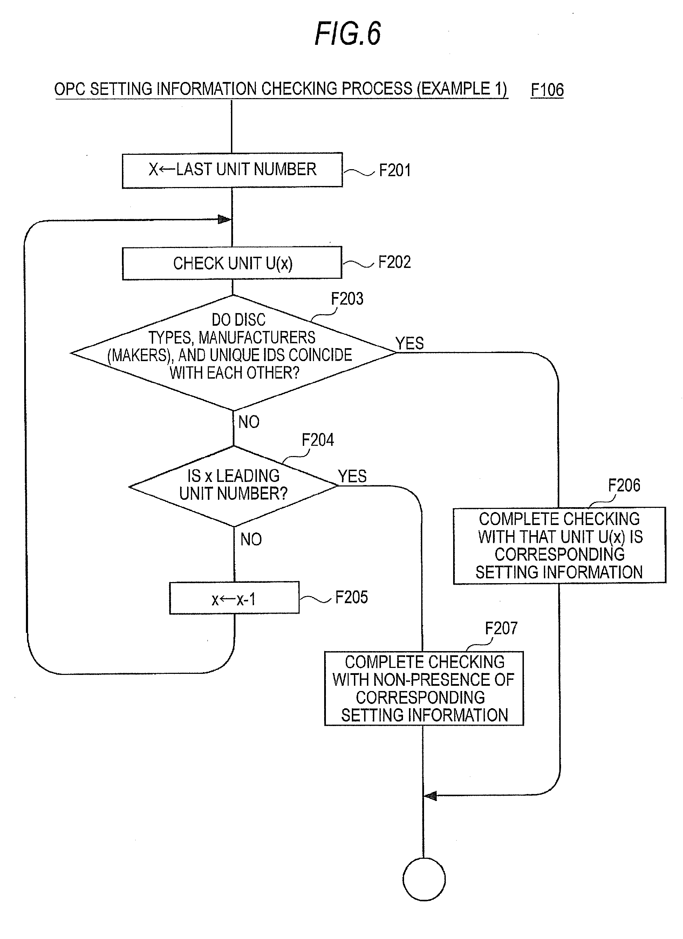

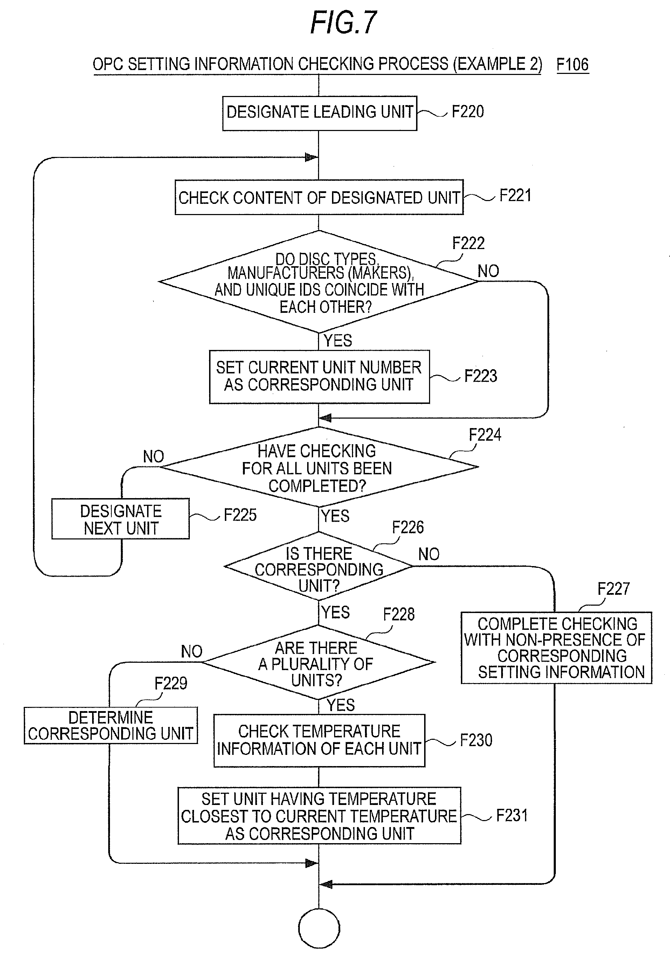

First, Example 1 and Example 2 of the OPC setting information checking process of Step F106 are illustrated in Figs. 6 and 7.

The system controller 10 checks whether or not a unit of the OPC setting information corresponding to the optical disc 90 that is currently loaded and set as a recording target is stored in the setting information storing area in Step F106.

Example 1 of the OPC setting information checking process illustrated in Fig. 6 is a process as below.

First, the system controller 10 substitute a variable x with a final number of the setting information unit stored in the setting information storing area in Step F201. Here, it is assumed that a unit number is added to each setting information unit of the setting information storing area in the storing order. Here, the final number is a number that represents a setting information unit that is stored latest.

The system controller 10 checks the content of the setting information unit U(x) in Step F202. Then, the system controller 10 checks the coincidence of the information on the optical disc 90 that is currently loaded, that is, the disc type, the manufacturer name, the unique ID, that are read out from the management information of Step F102 with the disc type, the disc maker, and the unique ID of the setting information unit U(x).

When all the disc type, the disc maker, and the unique ID coincide with those of the optical disc 90 that is currently loaded, the setting information unit U(x) is determined as setting information unit corresponding to the optical disc 90 that is currently loaded.

On the other hand, in a case where any one of the disc type, the disc maker, and the unique ID is not in correspondence with those of the optical disc 90 that is currently loaded, the setting information unit U (x) is determined to be not setting information unit corresponding to the optical disc 90 that is currently loaded.

In a case where the setting information unit U(x) is determined not to be the setting information unit corresponding to the optical disc 90 that is currently loaded, the system controller 10 proceeds from Step F203 to Step F204, and checks whether the variable x is the leading number of the unit. In other words, it is determined whether or not the checking of all the setting information units is complemented.

When the variable x is not the leading number of the unit, the variable x is decremented in Step F205, and the content of the next setting information unit U(x) is checked in Step F202.

In other words, the system controller 10 performs a process in which the contents are sequentially checked from the latest setting information unit, and the setting information unit corresponding to the optical disc 90 that is currently loaded is searched.

In a case where the disc type, the disc maker, and the unique ID of the setting information unit U(x) that is in the middle of the checking process coincide with those of the optical disc 90, which is currently loaded, at a time point, the system controller 10 proceeds from Step F203 to F206, determines the setting information unit U(x) as the setting information unit corresponding to the optical disc 90 that is currently loaded, and ends the setting information checking process of F106.

On the other hand, a case where the variable x is a unit leading number without finding the corresponding setting information unit in Step F204 is a case where all the setting information units stored in the setting information storing area are checked not to be in correspondence with the optical disc 90 that is currently loaded. At that time, the system controller 10 proceeds to Step F207 and ends the setting information checking process of Step F106 as a result of the checking that there is no corresponding setting information unit.

In addition, in a case where it is checked that there is no corresponding OPC setting information, in the process illustrated in Fig. 5, the process of Step F107 -> Step F109 -> Step F110 -> Step F111 is performed as described above.

In this OPC setting information checking process illustrated in Fig. 6, in a case where one unit of the setting information unit corresponding to the optical disc 90 that is currently loaded is present, the setting information unit is determined as a unit having the corresponding OPC setting information. In addition, in a case where a plurality of the corresponding setting information unit are present, the latest one of the setting information units is determined as a unit having the corresponding OPC setting information.

In other words, in a case where a plurality of units of the setting information of the recording laser power and the laser driving pulse corresponding to the optical disc 90 set as the recording target are stored in the setting information storing area, the system controller 10 reads out the latest setting information for the OPC process performed thereafter.

When a variance of the recording conditions such as a change by time is considered, the setting information under the recording conditions that are close to the current recording conditions can be acquired by reading out the latest setting information unit.

Next, Fig. 7 illustrates Example 2 as an OPC setting information checking process of the same Step F106. This Example 2 is an example in which the system controller 10 reads out setting information of which the recording conditions are the closest to those of the current recording conditions in a case where a plurality of units of the setting information of the recording laser power and the laser driving pulse corresponding to the optical disc set as a recording target are stored in the setting information storing area.

First, the system controller 10 designates the leading setting information unit of the setting information units stored in the setting information storing area in Step F220.

Then, the system controller 10 checks the content of the designated setting information unit (for example, unit U1) in Step F221. Then, the system controller 10 checks the coincidence of the information on the optical disc 90 that is currently loaded, that is, the disc type, the manufacturer name, and the unique ID that are read out from the management information in Step F102 with the disk type, the disc maker, and the unique ID of the setting information unit U(x).

Similarly to Example 1 described above, only in a case where all the disc type, the disc maker, and the unique ID coincide with those of the optical disc 90 that is currently loaded, the setting information unit in the middle of the checking process is determined to be the setting information unit corresponding to the optical disc 90 that is currently loaded.

When the corresponding setting information unit is determined, the system controller 10 stores the unit number of the setting information unit in the middle of the checking process as a corresponding unit in Step F223. For example, the system controller 10 performs a process in which a flag is set in an internal register in correspondence with the number of the current setting information unit.

On the other hand, in a case where any one of the disc type, the disc maker, the unique ID is not in correspondence with that of the optical disc 90 that is currently loaded, the setting information unit is determined as not the setting information unit corresponding to the optical disc 90 that is currently loaded, and the process of Step F223 is not performed.

In Step F224, it is determined whether the checking of all the setting information units is completed. In a case where the checking is not completed, the next setting information unit (for example, unit U2) is designated in Step F225, and the process is returned back to Step F221.

In other words, the process of Step F221 is sequentially performed for all the setting information units.

When the checking of all the setting information units is completed, the process proceeds from Step F224 to Step F226, and the system controller 10 checks whether or not there is setting information unit corresponding to the optical disc 90 that is currently loaded. For example, this is checking whether or not at least one unit number for which the flag process of Step F223 has been performed is present.

When at least one corresponding setting information unit is not present, the system controller 10 proceeds to Step F227 and ends the setting information checking process of Step F106 as a result of checking that there is no corresponding setting information unit. In addition, in this case, in the process illustrated in Fig. 5, the process of Step F107 -> Step F109 -> Step F110 -> Step F111 is performed as described above.

On the other hand, in a case where one or more corresponding setting information units are present, the system controller 10 branches the process by checking whether or not a plurality of units are present in Step F228.

In a case where one corresponding setting information unit is present, the process proceeds to Step F229, and the system controller 10 determines the setting information unit as the setting information unit corresponding to the optical disc 90 that is currently loaded and ends the setting information checking process of Step F106.

In a case where a plurality of the corresponding setting information units are present, the system controller 10 proceeds to Step

F230 and performs a process of selecting setting information of which the recording conditions are closest to the current recording conditions from among the setting information units.

For example, as the recording conditions, temperature information is used. The system controller 10 determines the current temperature based on the detection information of the sensor 21 and checks the temperature information of each setting information unit. Then, in Step F231, a setting information unit of which the stored temperature information is closest to the current temperature is selected from among the plurality of setting information units. Then, the system controller 10 determines the selected setting information unit as the setting information unit corresponding to the optical disc 90 that is currently loaded and ends the setting information checking process of Step F106.

As above, by selecting the setting information unit of which the recording conditions such as temperature are close to the current conditions in a case where there are a plurality of corresponding setting information units, setting information that is appropriate to the current recording conditions can be acquired.

In addition, here, although the temperature is used as an example, for example, a setting information unit at the time when the OPC process for a recording layer in which data is to be currently recorded is actually performed may be selected. Furthermore, this condition and the temperature condition may be used together for the selection. It is apparent that conditions used for the selection may be used in accordance with the content of the information that is included in the setting information unit. For example, in a case where a radial tilt value at the time of the OPC is stored inside the setting information unit, a setting information unit having the radial tilt value that is close to the current state may be considered to be selected.

The process after that illustrated in Fig. 5 in a case where it is checked through the process as illustrated in Fig. 6 or 7 that there is the OPC setting information corresponding to the optical disc 90 that is currently loaded is as follows.

The system controller 10 proceeds from Step F107 to Step F108 illustrated in Fig. 5. In Step F108, the content of the setting information unit that is checked in Step F106 described above is read out, and the OPC initial value is set. In other words, the OPC Power (OPC Power L0, ..., OPC Power L3) that is stored in the setting information unit is used as the initial value (for example, a center value of the range of the laser power change) of the recording laser power B when the OPC is performed for each recording layer.

In addition, the value of the strategy correcting amount (Strategy Correcting Amount Layer 0, ..., Strategy Correcting Amount Layer 3) is set as the initial value of the laser driving pulse when the OPC is performed for each recording layer.

Then, the process proceeds to the OPC process of Step F109.

Here, in the OPC process, as described with reference to Fig. 8, first, in Step F301, the initial setting is performed.

As described above, in a case where there is no the OPC setting information corresponding to the optical disc 90 that is currently loaded, the initial values of the recording laser power and the laser driving pulse are, for example, set to fixed initial values that are determined in advance.

In contrast to this, in a case where the OPC setting information is present, the initial value determined in the above-described Step F108, that is, the OPC Power (OPC Power L0, ..., OPC Power L3) and the strategy correcting amount (Strategy Correcting Amount Layer 0, ..., Strategy Correcting Amount Layer L3) stored in the setting information unit is set as the initial value in Step F301.

In other words, in Step F301 when the OPC process for the recording layer L0 is started, the system controller 10 sets the value of "OPC Power L0" as the initial value of the recording laser power and sets the value of "Strategy Correcting Amount Layer 0" as the set initial value of the laser driving pulse. Then, the process of Step F302 and after that described above are performed.

In addition, in Step F301 when the OPC process for the recording layer L1 is started, the system controller 10 sets the value of "OPC Power L1" as the initial value of the recording laser power and sets the value of "Strategy Correcting Amount Layer 1" as the set initial value of the laser driving pulse.

Furthermore, in Step F301 when the OPC process for the recording layer L2 is started, the system controller 10 sets the value of "OPC Power L2" as the initial value of the recording laser power and sets the value of "Strategy Correcting Amount Layer 2" as the set initial value of the laser driving pulse.

In addition, in Step F301 when the OPC process for the recording layer L3 is started, the system controller 10 sets the value of "OPC Power L3" as the initial value of the recording laser power and sets the value of "Strategy Correcting Amount Layer 3" as the set initial value of the laser driving pulse.

By setting the initial values as above, the OPC process can be efficiently performed.

In other words, the initial values are the optimal recording laser power and the optimal laser driving pulse acquired through the OPC process for the optical disc 90, which is currently loaded, that is performed in the past. Accordingly, when test writing is performed while changing the laser power in a stepped manner with the recording laser power used as the center value, there is a high possibility that the recording laser power optimal for this time can be determined through one or small number of test writings. Similarly, when the test writing is performed while changing the pulse timing in a stepped manner with the laser driving pulse, which is set to be optimal in the past, used as the center, there is a high possibility that the laser driving pulse optimal for this time can be found through one or a small number of test writings.

As the number of the retries of the test writing operations is smaller, the consumption of the PCA in the optical disc 90 can be decreased, and the time for the OPC process can be shortened.

Furthermore, by optimizing not only the recording laser power but also the laser driving pulse in the OPC, the quality of the recording operation performed thereafter can be stabilized or improved.

In addition, by using not only the recording laser power but also the setting value of the laser driving pulse when the OPC result is referred to, the efficiency of the OPC can be promoted.

### [4. Second Embodiment]

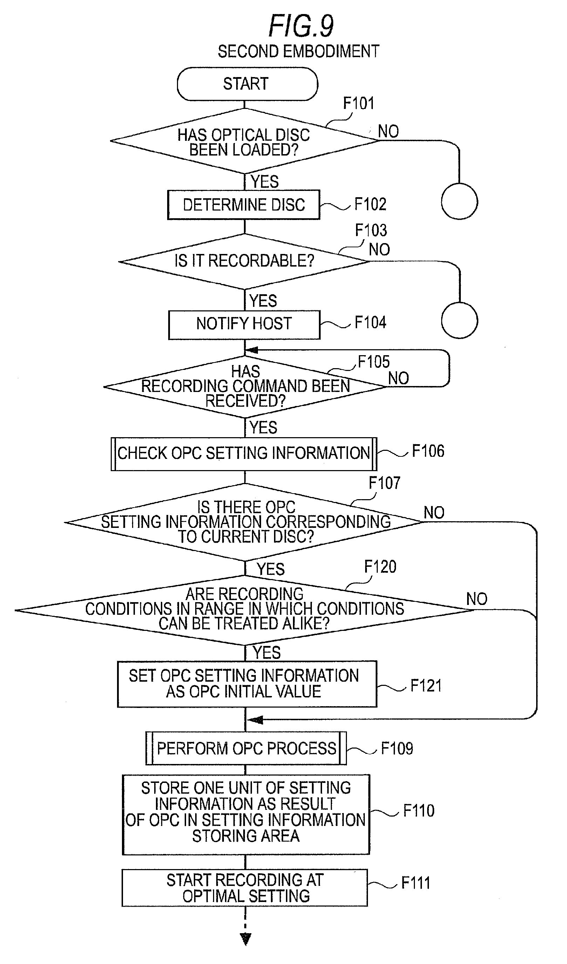

The process of a disc drive device according to a second embodiment will be described with reference to Fig. 9. In the description of each embodiment presented below, the same step number is assigned to the same process as that of the first embodiment illustrated in Fig. 5, and the description thereof is omitted.

Steps F101 to F106 shown in Fig. 9 are the same as those of the first embodiment. In addition, the process (F106 -> F107 -> F109 -> F110 -> F111) performed when the OPC setting information corresponding to the optical disc 90 that is currently loaded is determined not to be present in Step F106 is similar to that of the first embodiment.

In the case of the second embodiment, in a case where the OPC setting information corresponding to the optical disc 90 that is currently loaded is checked to be present in Step F106, the system controller 10 proceeds from Step F107 to Step F120. Then, the system controller 10 determines whether or not the recording conditions of the OPC setting information and the current recording conditions are in a range that can be treated alike.

For example, the recording conditions described here are the temperature conditions. In other words, the system controller 10 determines whether the value of the temperature stored as the OPC setting information and the value of the temperature currently detected by the temperature sensor 21 are in a range that can be treated alike as the recording conditions.

For example, in a case where the value of the temperature information included in the OPC setting information is in the range of ±10°C with respect to the current temperature, it is regarded as being in the range that can be treated alike.

In a case where the temperature conditions are not in the range that can be treated alike, the OPC setting information is not used. In other words, the system controller proceeds 10 proceeds from Step F120 to Step F109, and the OPC process is performed similarly to the case where the OPC setting information is not present.

On the other hand, in a case where the temperature difference is in the range of ±10°C so as to be in the range in which the temperature conditions can be treated alike, the system controller 10 proceeds from Step F120 to Step F121, reads out the content of the setting information unit checked in Step F106 described above, and sets the OPC initial values . In other words, the system controller 10 sets the OPC power (OPC Power L0, ..., OPC Power L3) stored in the setting information unit as the initial value (the center value in the range in which the laser power is changed) of the recording laser power at the time of performing the OPC for each recording layer. In addition, the system controller 10 sets the strategy correcting amount (Strategy Correcting Amount Layer 0, ..., Strategy Correcting Amount Layer 3) as the initial value of the laser driving pulse at the time of performing the OPC for each recording layer.

Then, the process proceeds to the OPC process of Step F109. In this case, the OPC process is performed by using the values set as the initial values in Step F121, that is, the values of the OPC power (OPC Power L0, ..., OPC Power L3) and the strategy correcting amount (Strategy Correcting Amount Layer 0, ..., Strategy Correcting Amount Layer 3) that are stored in the setting information unit as the initial values.

By setting the initial values as above, the efficiency of the OPC process can be improved. Particularly, in a case where the temperature condition is close, by using the OPC setting information used in the past, the initial values that are appropriately estimated to be close to the recording laser power and the laser driving pulse that are currently optimal are used, whereby a possibility that the OPC process is efficiently performed can be increased.

In addition, here, although the temperature conditions are described as the recording conditions, in a case where the recording layer as an OPC target is different from the content of the OPC setting information, for example, even in a case where the setting of the recording laser power and the laser driving pulse that are optimal to the recording layer for which the OPC process is performed are not stored, the recording conditions may be determined not to be treated alike so as not to use the OPC setting information. Furthermore, in a case where information on the other recording conditions such as radial tilt information is included in the OPC setting information, it may be determined whether the information is in the range that can be treated alike the current recording conditions so as to determine whether the OPC setting information is used.

### [5. Third Embodiment]

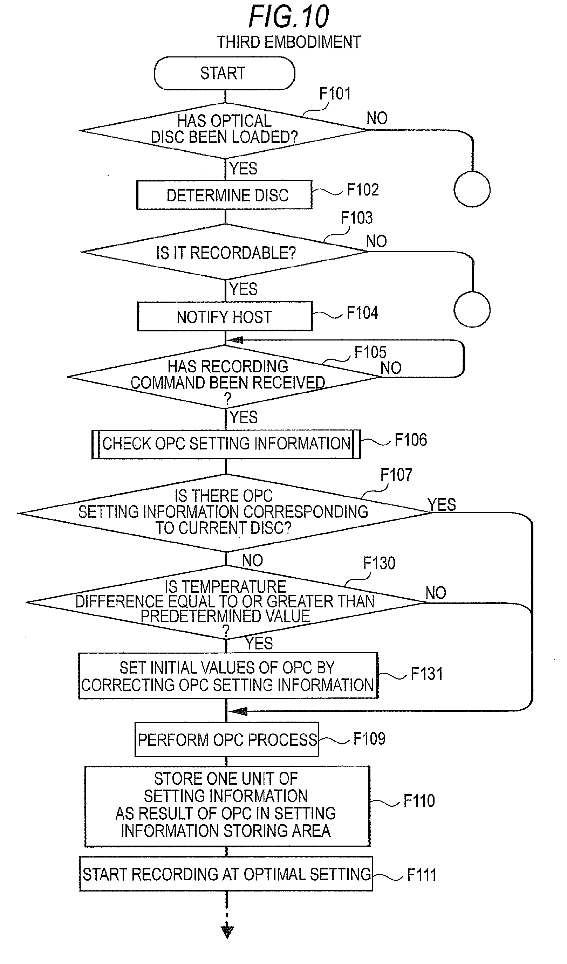

The process of a disc drive device according to a third embodiment will be described with reference to Fig. 10.

Steps F101 to F106 shown in Fig. 10 are the same as those of the first embodiment. In addition, the process (F106 -> F107 -> F109 -> F110 -> F111) performed when the OPC setting information corresponding to the optical disc 90 that is currently loaded is determined not to be present in Step F106 is similar to that of the first embodiment.

In the case of the third embodiment, in a case where the OPC setting information corresponding to the optical disc 90 that is currently loaded is checked to be present in Step F106, the system controller 10 proceeds from Step F107 to Step F130. Then, the system controller 10 determines whether or not a temperature difference between the temperature information included in the OPC setting information and the current temperature is equal to or greater than a predetermined value.

For example, it is determined whether the value of the temperature information included in the OPC setting information is in the range of ±10°C with respect to the current temperature.

In a case where the temperature difference is equal to or greater than the predetermined value, the OPC setting information is not used. In other words, the system controller 10 proceeds from Step F130 to Step F109, and the OPC process is performed similarly to a case where the OPC setting information is not present.

On the other hand, in a case where the temperature difference is in the range of ±10°C, the system controller 10 proceeds from Step F130 to Step F131, reads out the content of the setting information unit checked in Step F106 described above, and sets the OPC initial values by correcting the OPC setting information.

In other words, the values of the OPC power (OPC Power L0, ..., OPC Power L3) stored in the setting information unit and the strategy correcting amount (Strategy Correcting Amount Layer 0, ..., Strategy Correcting Amount Layer 3) are corrected based on the difference between the temperature acquired when the OPC is performed and the current temperature for which the OPC is performed.

For example, it is assumed that the current temperature is 25°C, and the temperature stored in the OPC setting information is 18°C. In addition, it is assumed that the value of the optimal recording laser power below 25°C is LP25, and the value of the optimal recording laser power below 18°C is LP18.

In this case, the OPC power (OPC Power L0, ..., OPC Power L3) included in the OPC setting information is multiplied by a coefficient of (LP25/LP18) so as to be set as the initial value.

Also for the strategy correcting amount, information of the variances in the correction amount at general temperature is prepared in advance, and correction may be performed based on the stored prepared information.

The system controller 10, for example, sets the initial values by correcting the values of the OPC setting information as above. Then, the system controller 10 performs the OPC process by using the initial values in Step F109.

By performing correction as above, the setting value that is optimal to the OPC in the past is set as a value that is adapted to the current temperature condition, and the OPC process can be performed by using the adapted value as the initial value of the OPC.

Accordingly, the OPC process can be started from the setting state that is further close to the current recording conditions, and the efficiency of the OPC process can be promoted.

In addition, in the process illustrated in Fig. 10, although the temperature difference is checked in Step F130, this process is performed in Step F106, and the setting information unit of which the temperature difference is equal to or greater than a predetermined value may not be the OPC setting information corresponding to the optical disc 90 that is currently loaded.

### [6. Fourth Embodiment]

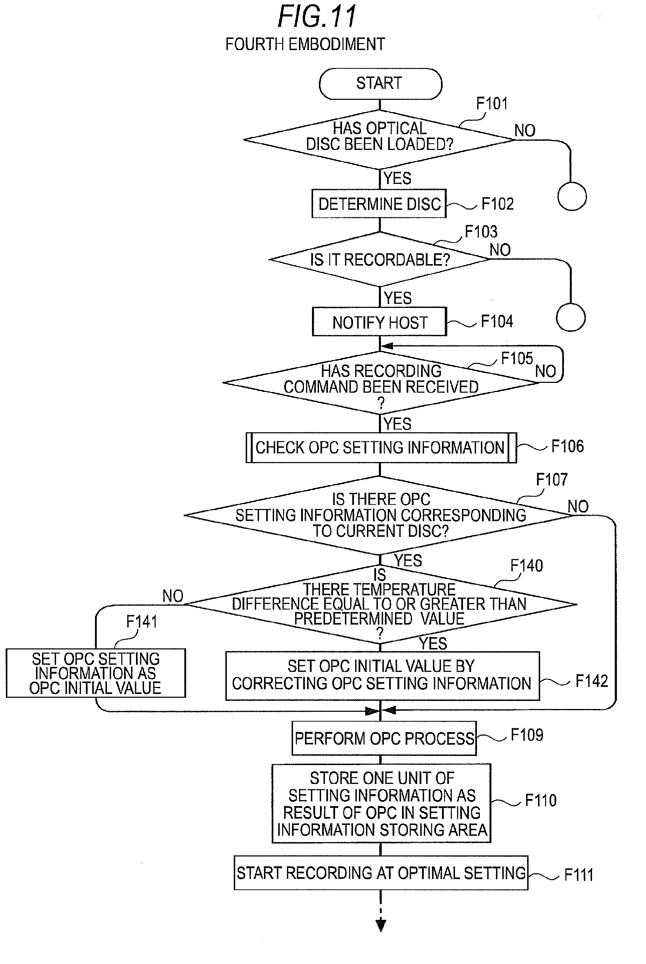

The process of a disc drive device according to a fourth embodiment will be described with reference to Fig. 11.

Steps F101 to F106 shown in Fig. 11 are the same as those of the first embodiment. In addition, the process (F106 -> F107 -> F109 -> F110 -> F111) performed when the OPC setting information corresponding to the optical disc 90 that is currently loaded is determined not to be present in Step F106 is similar to that of the first embodiment.

In the case of the fourth embodiment, in a case where the OPC setting information corresponding to the optical disc 90 that is currently loaded is checked to be present in Step F106, the system controller 10 proceeds from Step F107 to Step F140. Then, the system controller 10 determines whether or not a temperature difference between the temperature information included in the OPC setting information and the current temperature is equal to or higher than predetermined temperature.

For example, it is determined whether the value of the temperature information included in the OPC setting information is in the range of ±10°C with respect to the current temperature.

In a case where the temperature difference is within the predetermined range, the system controller 10 proceeds from Step F140 to Step F141, reads out the content of the setting information unit checked in Step F106 described above, and sets the initial values of the OPC. In other words, the OPC power (OPC Power L0, ..., OPC Power L3) stored in the setting information unit is set as the initial value (a center value in the range in which the laser power is changed) of the recording laser power at the time of performing the OPC for each recording layer. In addition, the value of the strategy correcting amount (Strategy Correcting Amount Layer 0, ..., Strategy Correcting Amount Layer 3) is set as the initial value of the laser driving pulse at the time of performing the OPC for each recording layer.

Then, the process proceeds to the OPC process of Step F109. In this case, the OPC process is performed with the OPC power (OPC Power L0, ..., OPC Power L3) and the strategy correcting amount (Strategy Correcting Amount Layer 0, ... , Strategy Correcting Amount Layer 3) that are stored in the setting information unit used as the initial values.

On the other hand, in a case where the temperature difference is determined to be equal to or greater than the predetermined value in Step F140, the system controller 10 proceeds to Step F142, reads out the content of the setting information unit that has been checked in Step F106 described above, and sets the initial values of the OPC by correcting the OPC setting information.

In other words, as the correction as described in the above-described third embodiment, the values of the OPC power (OPC Power L0, ..., OPC Power L3) stored in the setting information unit and the strategy correcting amount (Strategy Correcting Amount Layer 0, ..., Strategy Correcting Amount Layer 3) are corrected based on the difference between the temperature acquired when the OPC is performed and the current temperature for which the OPC is to be performed.

Then, the system controller 10 sets the initial values by correcting the values of the OPC setting values. Then, the system controller 10 performs the OPC process by using the initial values in Step F109.

In other words, in this fourth embodiment, when the current temperature state is close to the temperature state at the time of the OPC process at which the OPC setting information is stored, the values of the recording laser power and the laser driving pulse included in the OPC setting information are directly used as the initial values of the OPC.

On the other hand, in a case where the temperature states are greatly different from each other, the values of the recording laser power and the laser driving pulse that are included in the OPC setting information are corrected so as to be used as the initial values of the OPC. Accordingly, the degree of adequateness of the initial values is improved.

As above, in a case where the OPC setting information corresponding to the optical disc 90 that is currently loaded is present, the OPC setting information is effectively used, and the OPC process can be effectively performed.

### [7. Fifth Embodiment]

In the first to fourth embodiment presented until now, an example in which the OPC process is efficiently performed by setting the initial values of the OPC by using the OPC setting information, and performing the OPC by using the initial values. In contrast to this, fifth to eighth embodiments presented hereinafter are examples of the process in which a case where the OPC process is not performed is arranged.

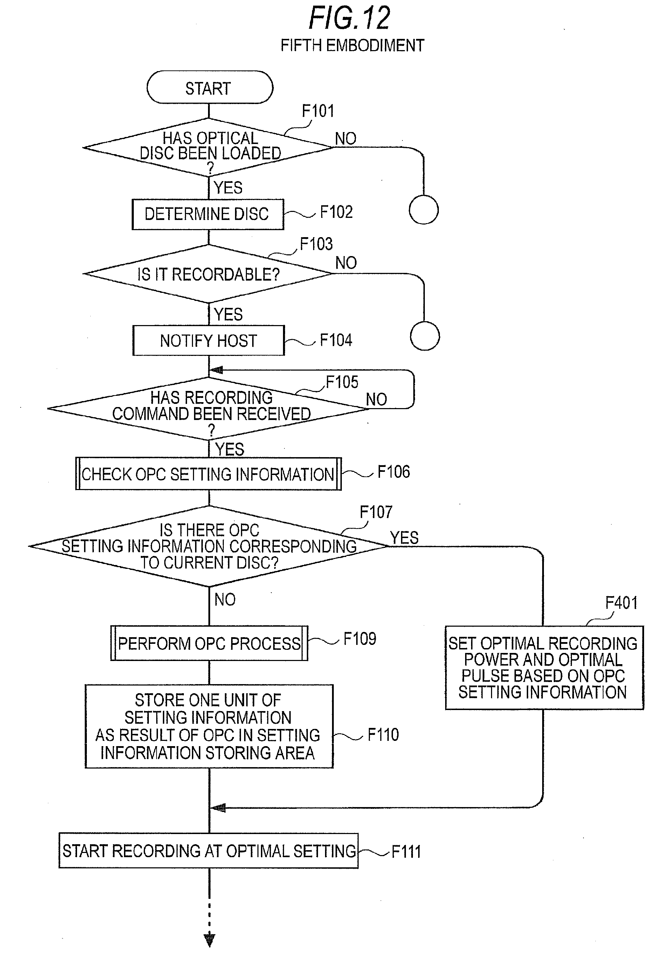

The process of a disc drive device according to a fifth embodiment will be described with reference to Fig. 12.

Steps F101 to F106 shown in Fig. 12 are the same as those of the first embodiment. In addition, the process (F106 -> F107 -> F109 -> F110 -> F111) performed when the OPC setting information corresponding to the optical disc 90 that is currently loaded is determined not to be present in Step F106 is similar to that of the first embodiment.

According to this fifth embodiment, in a case where the OPC setting information corresponding to the optical disc 90 that is currently loaded is checked to be present in Step F106, the system controller 10 proceeds from Step F107 to Step F401. Then, the system controller 10 sets the OPC power (OPC Power L0, ..., OPC Power L3) included in the OPC setting information as the recording laser power optimal to each recording layer. In addition, the system controller 10 sets the value of the strategy correcting amount (Strategy Correcting Amount Layer 0, ..., Strategy Correcting Amount Layer 3) as the laser driving pulse that is optimal to each recording layer.

Then, the recording operation control of Step F111 is started without performing the OPC process.

In this fifth embodiment, in a case where the OPC setting information corresponding to the optical disc 90 that is currently loaded is present, the content of the OPC setting information is directly used as the optimal setting value, and actual recording is performed with the OPC process omitted. Accordingly, the time until the start of recording can be shortened, and the consumption of the PCA area can be reduced.

### [8. Sixth Embodiment]

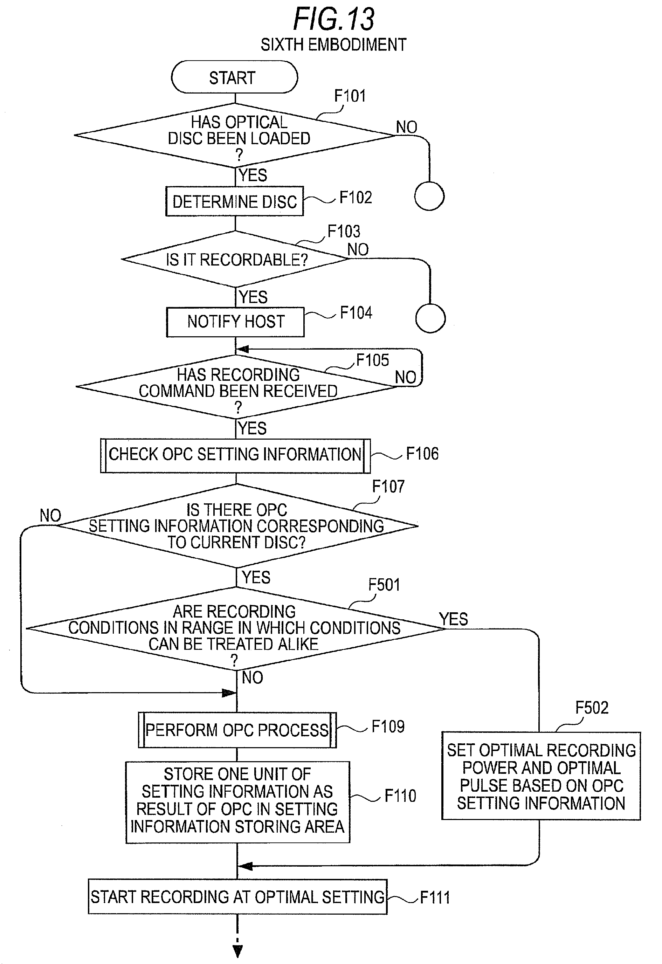

The process of a disc drive device according to a sixth embodiment will be described with reference to Fig. 13.

Steps F101 to F106 shown in Fig. 13 are the same as those of the first embodiment. In addition, when the OPC setting information corresponding to the optical disc 90 that is currently loaded is determined not to be present in Step F106, the process proceeds from Step F107 to the process of Steps F109 and F110, and thereafter recording is started in Step F111, which are similar to those of the first embodiment.

In the sixth embodiment, in a case where the OPC setting information corresponding to the optical disc 90 that is currently loaded is checked to be present in Step F106, the system controller 10 proceeds from Step F107 to Step F501. Then, the system controller 10 determines whether or not the recording conditions (for example, the temperature conditions or the target recording layers, or the like) included in the OPC setting information are in the range in which the conditions can be treated alike.

In a case where the recording conditions are not in the range in which the recording conditions can be treated alike, the process proceeds from Step F501 to Step F109, and the OPC process is performed.

On the other hand, in a case where the recording conditions are in the range in which the recording conditions can be treated alike, the system controller 10 proceeds from Step F501 to Step F502. Then, the OPC power (OPC Power L0, ..., OPC Power L3) included in the OPC setting information is set as the recording laser power that is optimal to each recording layer. In addition, the value of the strategy correcting amount (Strategy Correcting Amount Layer 0, ..., Strategy Correcting Amount Layer 3) is set as the laser driving pulse that is optimal to each recording layer.

Then, the recording operation control of Step F111 is started without performing the OPC process.

In this sixth embodiment, in a case where the OPC setting information corresponding to the optical disc 90 that is currently loaded is present, the content of the OPC setting information is directly used as the optimal setting value, and actual recording is performed with the OPC process omitted.

However, in a case where the recording conditions such as the temperature at the time of the OPC process when the OPC setting information is stored and at the current time are not in the range in which the recording conditions can be treated alike, it may be inappropriate to directly use the content of the OPC setting information as an optimal value in some cases. Thus, in such cases, the OPC process is performed, and thereby the recording quality in the actual recording operation of Step F111 is maintained.

### [9. Seventh Embodiment]

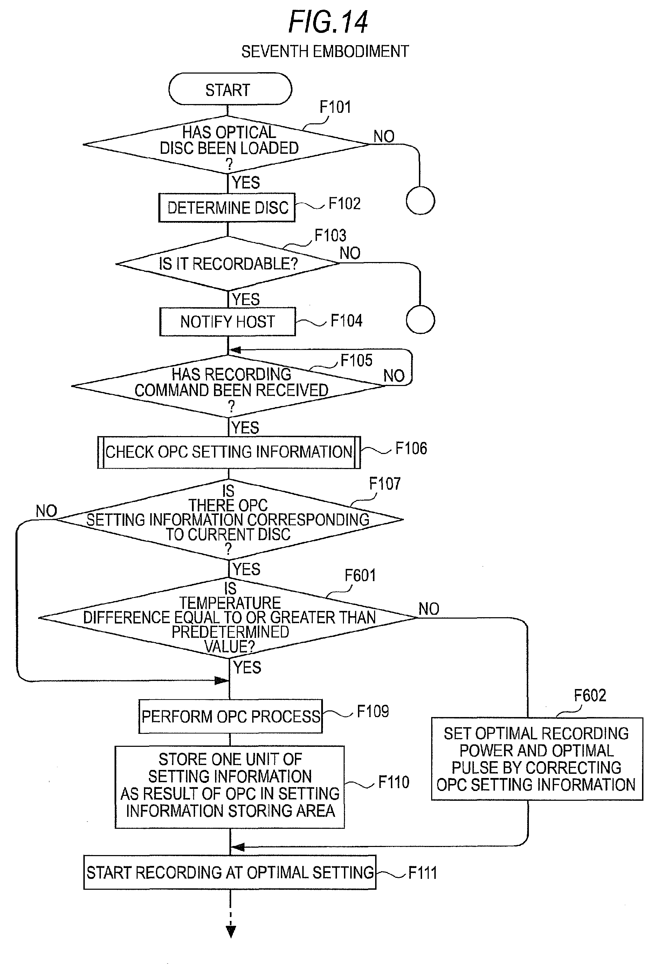

The process of a disc drive device according to a seventh embodiment will be described with reference to Fig. 14.

Steps F101 to F106 shown in Fig. 14 are the same as those of the first embodiment. In addition, the advancement of the process F107 -> F109 -> F110 -> F111 performed when the OPC setting information corresponding to the optical disc 90 that is currently loaded is determined not to be present in Step F106 is similar to that of the first embodiment.

In the seventh embodiment, in a case where the OPC setting information corresponding to the optical disc 90 that is currently loaded is checked to be present in Step F106, the system controller 10 proceeds from Step F107 to Step F601. Then, the system controller 10 determines whether or not a temperature difference between the temperature information included in the OPC setting information and the current temperature is equal to or greater than a predetermined value.

In a case where the temperature difference is equal to or greater than the predetermined value, and the content of the OPC setting information is determined as a value under a condition in which the temperature is greatly different from the current temperature, the process proceeds from Step F601 to Step F109, and the OPC process is performed.

On the other hand, in a case where it is determined that the temperature difference is within a predetermined range and is in the range in which the recording conditions can be treated alike, the system controller 10 proceeds from Step F601 to Step F602. Then, the system controller 10 sets the OPC power (OPC Power L0, ..., OPC Power L3) included in the OPC setting information as the recording laser power that is optimal to each recording layer. In addition, the system controller 10 sets the value of the strategy correcting amount (Strategy Correcting Amount Layer 0, ..., Strategy Correcting Amount Layer 3) as the setting of the laser driving pulse that is optimal to each recording layer.

Then, the recording operation control of Step F111 is started without performing the OPC process.

In this seventh embodiment, in a case where the OPC setting information corresponding to the optical disc 90 that is currently loaded is present, the content of the OPC setting information is directly used as the optimal setting value, and actual recording is performed with the OPC process omitted. However, in a case where the temperature condition at the time of the OPC process when the OPC setting information is stored and the current temperature condition are greatly different from each other, it may be inappropriate to directly use the content of the OPC setting information as an optimal value in some cases. Thus, in such cases, the OPC process is performed.

### [10. Eighth Embodiment]

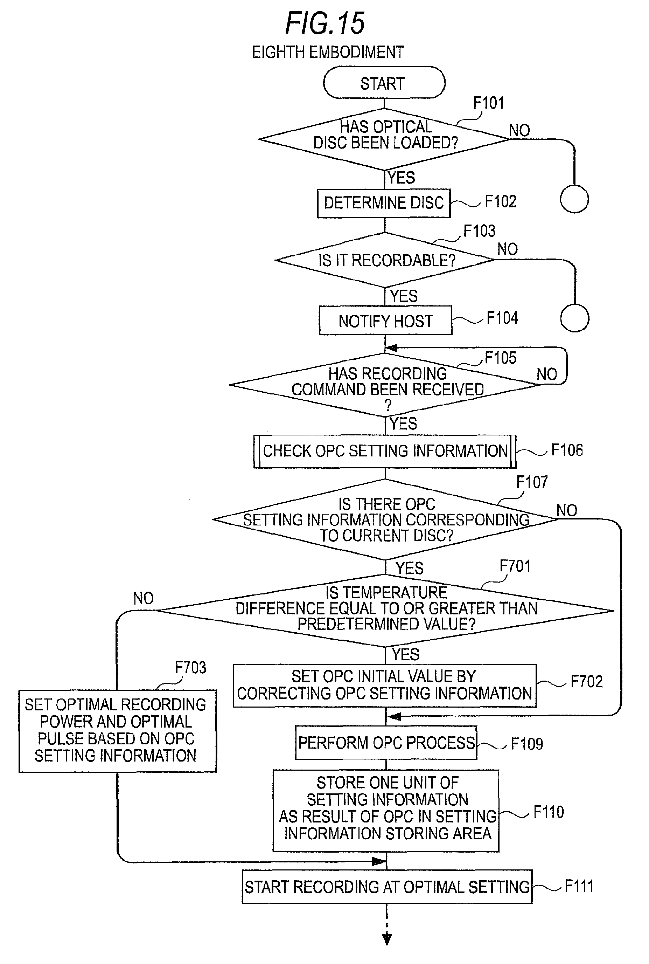

The process of a disc drive device according to an eighth embodiment will be described with reference to Fig. 15.

Steps F101 to F106 shown in Fig. 15 are the same as those of the first embodiment. In addition, the advancement of the process F107 -> F109 -> F110 -> F111 performed when the OPC setting information corresponding to the optical disc 90 that is currently loaded is determined not to be present in Step F106 is similar to that of the first embodiment.

In the eighth embodiment, in a case where the OPC setting information corresponding to the optical disc 90 that is currently loaded is checked to be present in Step F106, the system controller 10 proceeds from Step F107 to Step F701. Then, the system controller 10 determines whether or not a temperature difference between the temperature information included in the OPC setting information and the current temperature is equal to or greater than a predetermined value.

In a case where the temperature difference is equal to or greater than the predetermined value, and the content of the OPC setting information is determined to be a condition in which the temperature is greatly different from the current temperature, the system controller 10 proceeds from Step F701 to Step F702, reads out the content of the setting information unit checked in Step F106, and sets the initial values of the OPC by correcting the OPC setting information.

In other words, as the correction as described in the above-described third embodiment, the values of the OPC power (OPC Power L0, ..., OPC Power L3) stored in the setting information unit and the strategy correcting amount (Strategy Correcting Amount Layer 0, ..., Strategy Correcting Amount Layer 3) are corrected based on the difference between the temperature acquired when the OPC is performed and the current temperature for which the OPC is to be performed.

Then, the system controller 10 sets the initial values by correcting the values of the OPC setting values. Then, the system controller 10 performs the OPC process by using the initial values in Step F109.

On the other hand, in a case where it is determined that the temperature difference is within a predetermined range and is in the range in which the recording conditions can be treated alike, the system controller 10 proceeds from Step F701 to Step F703. Then, the system controller 10 sets the OPC power (OPC Power L0, ..., OPC Power L3) included in the OPC setting information as the recording laser power that is optimal to each recording layer. In addition, the system controller 10 sets the value of the strategy correcting amount (Strategy Correcting Amount Layer 0, ..., Strategy Correcting Amount Layer 3) as the setting of the laser driving pulse that is optimal to each recording layer.

Then, the recording operation control of Step F111 is started without performing the OPC process.

In this eight embodiment, in a case where the OPC setting information corresponding to the optical disc 90 that is currently loaded is present, and the temperature conditions are close to each other, the content of the OPC setting information is directly used as the optimal setting value, and actual recording is performed with the OPC process omitted. However, in a case where the OPC setting information is present and the temperature conditions are not close to each other, the content of the OPC setting information is corrected so as to set the OPC initial values. Then, the OPC process is performed by using the OPC initial values.

Accordingly, by not performing the OPC process in a case where the temperature conditions are close to each other, the time until the start of the recording can be shortened, and the consumption of the PCA area can be reduced. In addition, by using the initial values acquired by correcting the content of the OPC setting information in a case where the temperature conditions are different from each other to a large extent, the OPC process can be efficiently performed, and the time until the start of recording can be shortened, and the consumption of the PCA area can be reduced.

### [11. Modified Example]

As above, while various embodiments have been described, as examples of the process according to the embodiment of the present disclosure, various modified examples may be considered.

The content of the OPC setting information is not limited to that illustrated in Fig. 3. For example, as mentioned above, the radial tilt information at the time of the OPC process may be added, or the optimal laser power information during recording in a land and during recording in a groove may be added depending on the disc type.

In each process described with reference to Figs. 5, 9, 10, 11, 12, 13, 14, and 15, the OPC is performed when a record command is received. However, the process of Step F106 and after that illustrated in each figure may be applied to a case where the OPC is performed at a different time point.

In addition, in the embodiments, an example in which a recording device according to an embodiment of the present disclosure is realized by a disc drive device for an optical disc such as a DVD type or a Blu-ray type has been described. However, an embodiment of the present disclosure may be applied to a recording device for another type of an optical recording medium. For example, an embodiment of the present disclosure can be applied to a recording device that records information by emitting laser beams to an optical card.

### [12. Program]

A program according to an embodiment of the present disclosure is a program that allows an operation processing device (the system controller 10 or the like) to perform the above-described processes illustrated in Figs. 5, 9, 10, 11, 12, 13, 14, and 15.

The program according to an embodiment is a program of an operation processing device for a recording device that includes a recording unit that records information in a recording layer of an optical recording medium through laser beam emission that is performed based on a laser driving pulse.

The program allows the operation processing device to perform reading out of setting information of a recording laser power and a laser driving pulse of a past that are stored in correspondence with an optical recording medium set as a recording target from a predetermined setting information storing area.

In addition, the program allows the operation processing device to allow the recording unit to perform test writing for a test writing area of the recording layer of the optical recording medium using the read out setting information of the past and to reproduce a test writing portion, and performing a setting process in which recording laser power and a laser driving pulse are set based on a result of the test writing and the reproduction.

Furthermore, the program allows the operation processing device to perform recording with the recording laser power and the laser driving pulse that are set in the setting process.

The program according to this embodiment may be recorded in advance in an HDD as a recording medium that is built in a device such as a disc drive device, an optical card recording device, a personal computer, or the like, a ROM or the like arranged inside a microcomputer that has a CPU.

Alternatively, or additionally, the program may be stored (recorded) temporarily or perpetually on a removable recording medium such as a flexible disk, a CD-ROM (Compact Disc Read Only Memory), an MO (Magnet optical) disc, a DVD, a Blu-ray disc, a magnetic disk, a semiconductor memory, or a memory card. Such a removable recording medium can provided as so-called package software.

In addition, the program according to an embodiment of the present disclosure may be installed to a personal computer or the like from a removable recording medium or may be downloaded through a network such as a LAN (Local Area Network) or the Internet.

This program is appropriate for realizing a recording device that performs the process of each of the above-described embodiments and for provision in a broad range.

The present application contains subject matter related to that disclosed in Japanese Priority Patent Application JP 2010-131618 filed in the Japan Patent Office on June 9, 2010, the entire contents of which is hereby incorporated by reference.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

### CLAUSES

Various aspects of the subject matter described herein are set forth for example, and without limitation, in the following numbered clauses:
1. A recording device comprising:
   a recording unit that records information in a recording layer of an optical recording medium through laser beam emission performed based on a laser driving pulse; and
   a control unit that reads out setting information of a recording laser power and a laser driving pulse of a past that are stored in correspondence with an optical recording medium set as a recording target from a setting information storing area, allows the recording unit to perform test writing for a test writing area of the recording layer of the optical recording medium using the read out setting information of the past and to reproduce a test writing portion, and performs a setting process in which recording laser power and a laser driving pulse are set based on a result of the test writing and the reproduction.
2. The recording device according to Clause 1, further comprising a memory unit that is used as the setting information storing area.
3. The recording device according to Clause 1, wherein, in a case where a plurality of units of the setting information of the recording laser power and the laser driving pulse corresponding to the optical recording medium set as the recording target are stored in the setting information storing area, the control unit reads out a latest setting information.
4. The recording device according to Clause 1, wherein, in a case where a plurality of units of the setting information of the recording laser power and the laser driving pulse corresponding to the optical recording medium set as the recording target are stored in the setting information storing area, the control unit reads out setting information of which a recording condition is the closest to a current recording condition.

## Claims

1. A recording device comprising:
a recording unit that records information in a recording layer of an optical recording medium through laser beam emission performed based on a laser driving pulse; and
a control unit that reads out setting information of a recording laser power and a laser driving pulse of a past that are stored in correspondence with an optical recording medium set as a recording target from a setting information storing area, allows the recording unit to perform test writing for a test writing area of the recording layer of the optical recording medium using the read out setting information of the past and to reproduce a test writing portion, and performs a setting process in which recording laser power and a laser driving pulse are set based on a result of the test writing and the reproduction.

2. The recording device according to Claim 1, wherein the control unit stores the setting information of the recording laser power and the laser driving pulse that is set by the setting process in the setting area storing area.

3. The recording device according to Claim 2, wherein, in a case where the setting information corresponding to the optical recording medium set as the recording target is determined not to be stored in the setting information storing area, the control unit allows the recording unit to perform test writing not using the setting information of the past for the test writing area and reproduce a portion in which the test writing is performed, performs the setting process in which the recording laser power and the laser driving pulse are set based on the result of the test writing and the reproduction, and stores the setting information of the recording laser power and the laser driving pulse that are set by the setting process in the setting information storing area.

4. The recording device according to Claim 3, wherein the control unit, as the test writing using the read-out setting information of the past, allows the test writing to be performed with the setting information of the recording laser power set as an initial power value of the laser power and the setting information of the laser driving pulse set as an initial setting value of the laser driving pulse.

5. The recording device according to Claim 3, wherein, in a case where the setting information of the recording laser power and the laser driving pulse corresponding to the optical recording medium set as the recording target is stored in the setting information storing area, the control unit uses the setting information for the test writing in a case where a recording condition at the time of the setting process in which the stored setting information is acquired and a current recording condition are determined to be in a range in which the conditions can be treated alike.

6. The recording device according to Claim 5, wherein the case where the recording conditions are in the range in which the conditions can be treated alike is a case where a temperature difference between the temperature at the time of the setting process in which the stored setting information is acquired and the current temperature is within a predetermined range.

7. The recording device according to Claim 3, wherein, as the test writing using the read-out setting information of the past, the control unit corrects the setting information of the recording laser power or the setting information of the laser driving pulse that is read out and allows the test writing to be performed by using the corrected setting information.

8. The recording device according to Claim 7, wherein, in a case where the setting information of the recording laser power and the laser driving pulse corresponding to the optical recording medium set as the recording target is stored in the setting information storing area, the control unit corrects the setting information of the recording laser power or the setting information of the laser driving pulse that is read out, and allows the test writing to be performed by using the corrected setting information in a case where a recording condition at the time of the setting process in which the stored setting information is acquired and a current recording condition are determined to be in a range in which the conditions can be treated alike.

9. The recording device according to Claim 7, wherein, in a case where the setting information of the recording laser power and the laser driving pulse corresponding to the optical recording medium set as the recording target is stored in the setting information storing area, the control unit allows the test writing using the setting information of the recording laser power and the setting information of the laser driving pulse that are read out in a case where the recording condition at the time of the setting process in which the stored setting information is acquired and the current recording condition are in a range in which the conditions can be treated alike and allows the test writing to be performed using corrected setting information by correcting the setting information of the recording laser power or the setting information of the laser driving pulse that is read out in a case where the recording condition at the time of the setting process in which the stored setting information is acquired and the current recording condition are determined not to be in the range in which the conditions can be treated alike.

10. The recording device according to Claim 7, wherein the control unit allows the test writing to be performed with the corrected setting information of the recording laser power set as initial power of laser power and the corrected setting information of the laser driving pulse as an initial value of the setting of the laser driving pulse.

11. The recording device according to Claim 2, wherein the control unit stores unit information that includes information used for identifying the optical recording medium, the setting information of the recording laser power for each recording layer of the optical recording medium, and the setting information of the laser driving pulse for each recording layer of the optical recording medium in the setting information storing area as one unit of the setting information.

12. The recording device according to Claim 1, wherein the control unit uses a part of the area of the optical recording medium set as the recording target or a part of the area of a memory unit of any other device connected thereto as the setting information storing area.

13. The recording device according to Claim 1, wherein, in a case where a plurality of units of the setting information of the recording laser power and the laser driving pulse corresponding to the optical recording medium set as the recording target are stored in the setting information storing area, the control unit reads out one of:
a latest setting information; and
setting information of which a recording condition is the closest to a current recording condition.

14. A recording method for a recording device that includes a recording unit that records information in a recording layer of an optical recording medium through laser beam emission that is performed based on a laser driving pulse, the recording method comprising the steps of:
reading out setting information of a recording laser power and a laser driving pulse of a past that are stored in correspondence with an optical recording medium set as a recording target from a setting information storing area;
allowing the recording unit to perform test writing for a test writing area of the recording layer of the optical recording medium using the read out setting information of the past and to reproduce a test writing portion, and performing a setting process in which recording laser power and a laser driving pulse are set based on a result of the test writing and the reproduction; and
performing recording with the recording laser power and the laser driving pulse that are set in the setting process.

15. A program of an operation processing device for a recording device that includes a recording unit that records information in a recording layer of an optical recording medium through laser beam emission that is performed based on a laser driving pulse, the program allowing the operation processing device to perform a process comprising:
reading out setting information of a recording laser power and a laser driving pulse of a past that are stored in correspondence with an optical recording medium set as a recording target from a setting information storing area;
allowing the recording unit to perform test writing for a test writing area of the recording layer of the optical recording medium using the read out the setting information of the past and to reproduce a test writing portion, and performing a setting process in which recording laser power and a laser driving pulse are set based on a result of the test writing and the reproduction; and
performing recording with the recording laser power and the laser driving pulse that are set in the setting process.
